# EUROPEAN PATENT SPECIFICATION

(11) **EP 4 277 213 B1**
(45) Date of publication and mention of the grant of the patent: **15.07.2026**
(21) Application number: 22770509.2
(22) Date of filing: 15.03.2022
(51) Int. Cl.: G06F 21/53, H04L 12/28, G06F 9/455, G06F 9/54, G06F 21/55, G06F 21/62, H04L 9/40, G06F 8/36, G06F 9/52

(54) **DISTRIBUTED ACCESS CONTROL METHOD AND RELATED APPARATUS AND SYSTEM**
VERFAHREN ZUR STEUERUNG DES VERTEILTEN ZUGRIFFS SOWIE ZUGEHÖRIGE VORRICHTUNG UND SYSTEM
PROCÉDÉ DE COMMANDE D'ACCÈS DISTRIBUÉ, APPAREIL ET SYSTÈME ASSOCIÉS

(30) Priority: 16.03.2021 CN 202110280096; 04.03.2022 CN 202210213077
(43) Date of publication of application: 15.11.2023
(73) Proprietor: Huawei Technologies Co., Ltd., Shenzhen, Guangdong 518129 (CN)
(72) Inventor: MAO, Zhewen, Shenzhen, Guangdong 518129 (CN); REN, Bingfei, Shenzhen, Guangdong 518129 (CN)
(74) Representative: MERH-IP Matias Erny Reichl Hoffmann Patentanwälte PartG mbB
(86) International application number: PCT/CN2022/080973
(87) International publication number: WO 2022/194156

(56) References cited:
- EP-A1- 4 270 230
- CN-A- 1 482 772
- CN-A- 1 613 059
- CN-A- 107 077 377
- US-A1- 2012 023 503
- US-A1- 2015 128 209
- US-A1- 2019 171 488
- US-A1- 2021 014 683

## Description

### TECHNICAL FIELD

This application relates to the field of computers and the field of communication technologies, and in particular, to a distributed access control method and a related apparatus and system.

### BACKGROUND

With development of intelligent terminals, there are more device types and devices in users' life. A fully-connected scenario in which the devices interwork and interconnect is being gradually implemented. In the fully-connected scenario, the devices share resources, for example, a computing resource, a storage resource, and a network resource, with each other. This becomes a trend in the future.

How to ensure that the devices can securely share the resources, ensure that device resources can be fully and appropriately used, and provide secure and effective fully-connected scenarios for the users is a new challenge.
Document US 2021/014683 A1 generally discloses a user equipment (UE) including: a processor; a transceiver; and a memory storing instructions that, when executed by the processor, controls the processor to: receive a communication request to communicate with a remote system; instantiate, in response to receiving the communication request, a UE virtual machine instance on the UE; generate a root certificate for the UE virtual machine instance; execute, on the UE virtual machine instance, an application for processing the communication request; transmit, through the transceiver and to an attestation server, the root certificate to attest to the execution of the application within the UE virtual machine instance; establish a communication link between the application and the remote system; and communicate, via the transceiver, with the remote system across the communication link.
Document US 2015/128209 A1 generally discloses a method for authenticating a user to provide access to a secure application configured on a mobile device are disclosed, the method including receiving an input from the user. The input is associated with a plurality of parameters. The method includes extracting a biometric pattern based on the input. The biometric pattern may be generated from the plurality of parameters associated with the input. The method may include comparing the biometric pattern with a plurality of reference patterns. The plurality of reference patterns are predefined by an owner of the mobile device. Furthermore, the method may include authenticating the user when the biometric pattern matches a reference pattern associated with the secure application from the plurality of reference patterns. Moreover, the method includes allowing the user to access the secure application, based on the authentication.
Document EP 4 270 230 A1 generally discloses an access control method, an electronic device, and a system, so as to run different instances when a callee provides services for different callers, and keep isolation between memory data of the different instances.

### SUMMARY

This application provides a distributed access control method and a related apparatus and system, to ensure that devices can securely share resources, and ensure that device resources can be fully and appropriately used. In particular, this disclosure provides an access control method according to claim 1. The dependent claims relate to preferred embodiments.

The technical solutions provided in this application are implemented to ensure that devices can securely share resources, and ensure that device resources can be fully and appropriately used.

### BRIEF DESCRIPTION OF DRAWINGS

FIG. 1 is a schematic diagram of a structure of a distributed system 10 according to an example of this application;
FIG. 2 shows distributed scenarios according to an example of this application;
FIG. 3A is a schematic diagram of two manners in which a called APP serve in a standalone scenario;
FIG. 3B shows a process isolation model according to an example of this application;
FIG. 3C is a flowchart of an access control method according to an embodiment of this application;
FIG. 4A is a schematic diagram of a manner of performing application data isolation on callers in a standalone scenario;
FIG. 4B shows a sandbox isolation model according to an embodiment of this application;
FIG. 4C is a flowchart of another access control method according to an embodiment of this application;
FIG. 5A is a schematic diagram of several manners of preventing an FA from leaking data;
FIG. 5B, FIG. 6, FIG. 7, FIG. 8A, FIG. 8B, and FIG. 9 each are a flowchart of an access control method according to an embodiment of this application;
FIG. 10 is a diagram of a software structure of an electronic device 300 according to an example of this application;
FIG. 11 is a diagram of a software structure of an electronic device 100 according to an example of this application;
FIG. 12A is a flowchart of a cross-device access control method according to an example of this application;
FIG. 12B is a diagram of a software structure of an electronic device 300 configured to implement the method shown in FIG. 12A;
FIG. 13A is a flowchart of a cross-platform access control method according to an example of this application;
FIG. 13B is a diagram of a software structure of an electronic device 300 configured to implement the method shown in FIG. 13A; and
FIG. 14 is a diagram of a hardware structure of an electronic device according to an example of this application.

### DESCRIPTION OF EMBODIMENTS

The technical solutions in embodiments of this application are clearly described below in detail with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

Terms "first" and "second" below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as Java or an extensible markup language (extensible markup language, XML). The interface source code is parsed and rendered on an electronic device, and finally presented as content that can be identified by the user. The user interface is usually represented in a form of a graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a Widget that is displayed on a display of the electronic device.

A communication system provided in embodiments of this application is first described.

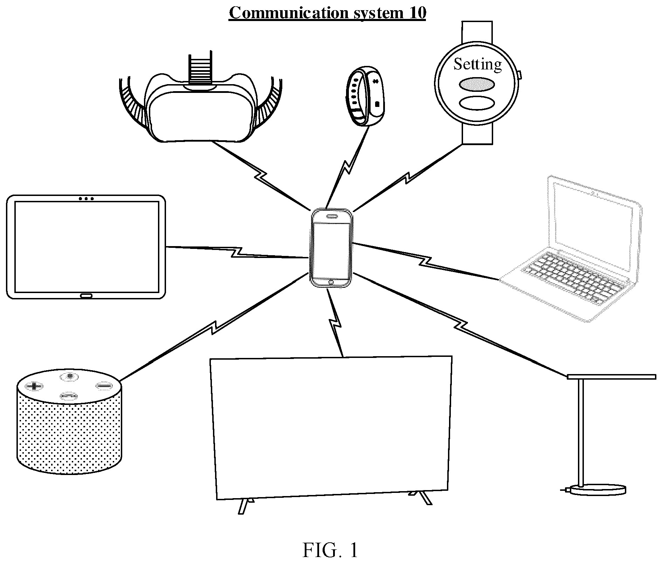

As shown in FIG. 1, an example not encompassed by the claims but useful for understanding this application this application provides a communication system 10. The communication system 10 includes a plurality of electronic devices. The communication system 10 may also be referred to as a distributed system 10.

The plurality of electronic devices included in the distributed system 10 are all intelligent terminal devices, and may be of various types. Specific types of the plurality of electronic devices are not specially limited in this embodiment of this application. For example, the plurality of electronic devices include a mobile phone, may further include a tablet, a desktop, a laptop, a handheld computer, a notebook, a smart screen, a wearable device, an augmented reality (augmented reality, AR) device, a virtual reality (virtual reality, VR) device, an artificial intelligence (artificial intelligence, AI) device, a head unit, a smart headset, and a game console, may further include an internet of things (internet of things, IOT) device or a smart home device such as a smart water heater, a smart lamp, or a smart air conditioner, and are not limited thereto. The plurality of devices in the distributed system 10 may further include a non-portable terminal device such as a laptop (laptop) having a touch-sensitive surface or a touch panel or a desktop having a touch-sensitive surface or a touch panel, or the like.

When the plurality of electronic devices in the distributed system 10 are all devices deployed at home, the distributed system 10 may also be referred to as a home distributed system.

The plurality of electronic devices in the distributed system 10 may be connected to each other by being logged in to by using a same account. For example, the plurality of electronic devices may be logged in to by using a same Huawei account, and are connected to and communicate with each other by using a server.

The plurality of electronic devices in the distributed system 10 may alternatively be logged in to by using different accounts, but are connected in a binding manner. For example, an electronic device 100 and an electronic device 200 may be logged in to by using different accounts. The electronic device 100 binds the electronic device 200 to the electronic device 100 in a device management application, and then is connected to the electronic device 200 by using the device management application. In the following embodiments of this application, the electronic device 100 may be any electronic device in the distributed system 10, and the electronic device 200 may also be any electronic device in the distributed system 10. For example, the electronic device 100 is a smartphone, and the electronic device 200 is a smart screen.

The plurality of electronic devices in the distributed system 10 may further establish a short-distance connection and communicate with each other by using Bluetooth (Bluetooth, BT), a wireless local area network (wireless local area network, WLAN), for example, wireless fidelity point-to-point (wireless fidelity point-to-point, Wi-Fi P2P), near field communication (near field communication, NFC), or an infrared (infrared, IR) technology, and the like.

In addition, the plurality of electronic devices in the communication system may be connected and communicate with each other with reference to any one or more of the foregoing manners. This is not limited in this embodiment of this application.

Different software operating systems (operating systems, OSs) including but not limited to Harmony^{®}, Android^{®}, iOS^{®}, Windows^{®}, Linux^{®}, and the like may be configured for the plurality of electronic devices. Harmony^{®} is HarmonyOS of Huawei.

A same software operating system, for example, Harmony^{®}, may alternatively be configured for all of the plurality of electronic devices. When software systems of the plurality of electronic devices are all Harmony^{®}, the distributed system 10 may be considered as a super device.

In this embodiment of this application, an application (application, APP), for example, a conventional camera application, a gallery application, or a setting application, may be installed in each device in the distributed system 10. In subsequent embodiments, a conventional APP may be referred to as an APP for short.

In addition, a distributed application (distributed application) may be installed in the distributed system 10 provided in this embodiment of this application. The distributed application may be a system application, or may be a third-party application. This is not limited herein.

Different from an APP having a plurality of abilities (abilities), the distributed application supports deployment performed in a unit of a single ability (ability). One distributed application includes one or more functional components.

The functional component is a minimum ability unit that can be run independently in the electronic device, and is a concept of abstraction and encapsulation of the single ability. The APP integrates a plurality of functions. The functional component uses each function as an independent service-oriented basic ability, and the function exists independently. That is, the functional component is a program entity that implements the single function.

Each functional component can be downloaded, installed, and run independently. A plurality of functional components that a same distributed application includes may be deployed in a same electronic device in the distributed system 10, or may be deployed in different electronic devices.

It may be understood that the functional component is merely a word used in this embodiment, and a meaning represented by the functional component has been recorded in this embodiment. A name of the functional component does not constitute any limitation on this embodiment. In addition, in some other embodiments of this application, the functional component may also be referred to as another term such as a system component, a system service, or a service function. In the subsequent embodiments of this application, the "functional component" is used for description.

Harmony^{®} is used as an example. Functional components in Harmony^{®} may include the following two types:

### (1) Feature ability, FA

The FA is a functional component that includes one or more groups of UIs, and may provide an ability of interacting with a user. For example, a navigation interface in a map application, a video call screen in an instant messaging application, or the like may be implemented as the FA.

In some embodiments, the FA is developed based on an MVVM (model-view-view-model) mode, and separates a view UI from service logic. Service logic code and view UI code are deployed separately. The view UI code may be integrated into another APP. In a running process, the view UI code may communicate with the service logic code to obtain data needed for UI display.

The FA supports abilities of a page template, for example, an empty ability, a login ability, and a setting ability. The FA uses a java script (java script, JS) to provide a declarative development mode, uses declarative programming languages such as an HTML and a cascading style sheet (cascading style sheet, CSS), as development languages of a page layout and a page style, and supports a JS language of an ECMAScript specification to provide page service logic.

The FA has abilities such as installation-free, stand alone, cross-device UI migration, and cross-device binary migration. The FA further has features of multi-end deployment and distributed execution.

The FA may call an AA or an APP to implement more complex and more functions.

### (2) Particle ability, PA

The PA is a functional component without a UI, and may provide support for the FA. For example, the PA may be used as a background service to provide a computing ability or be used as a data warehouse to provide a data access ability. For example, a facial enhancement function, a positioning function, an audio-video encoding/decoding function, or the like may be encapsulated as the PA.

The PA also has features such as multi-end deployment and distributed execution. The PA has a dependency relationship only with the system service, and has no dependency relationship with another PA.

The PA actually encapsulates implementation such as remote virtualization, remote calling, PA management, cross-platform compatibility, and security, and opens cross-device service enabling and calling for a developer, so that another device calls a computing ability of this device, and computing working of the another device is completed through collaboration. The PA supports a service ability, a data ability, and the like. The service ability is for providing an ability of running a task in a background. The data ability is for providing a unified data access abstraction externally.

The PA may call the FA or the APP to implement more complex and more functions.

It may be understood that the "FA" and the "PA" are merely words used in this embodiment, and may also be referred to as other terms in some other embodiments of this application. For example, the "PA" and the "FA" may also be referred to as other terms such as an atomic ability (atomic ability, AA), an atomic application, an atomic ability, an atomic service, and a feature ability.

A plurality of functional components that one distributed application includes may be developed or provided by a same developer, or may be separately developed or provided by a plurality of developers. This is not limited herein. Development efficiency of the distributed application can be improved by developing the functional components together by different developers.

In this embodiment of this application, the functional component provides a standardized interface externally for calling. The APP may call the functional component. In some cases, the functional component may also call another functional component or APP. In addition, the called functional component may also continue to call another functional component or APP, and such a multi-level calling manner may be referred to as chain calling.

After a communication connection is established between the devices in the distributed system 10, each device synchronizes functional component information and APP information of another device in the distributed system. Specifically, the device may synchronize, to the another device, names of a functional component and an APP that are installed in the device and device information (for example, a device identifier) of the device, to subsequently call functional components such as an FA and a PA of the another device in the distributed system 10. Which callers can call the functional components such as the FA and the PA, and which other functional components can be called by the functional components such as the FA and the PA may be preset and recorded in each electronic device.

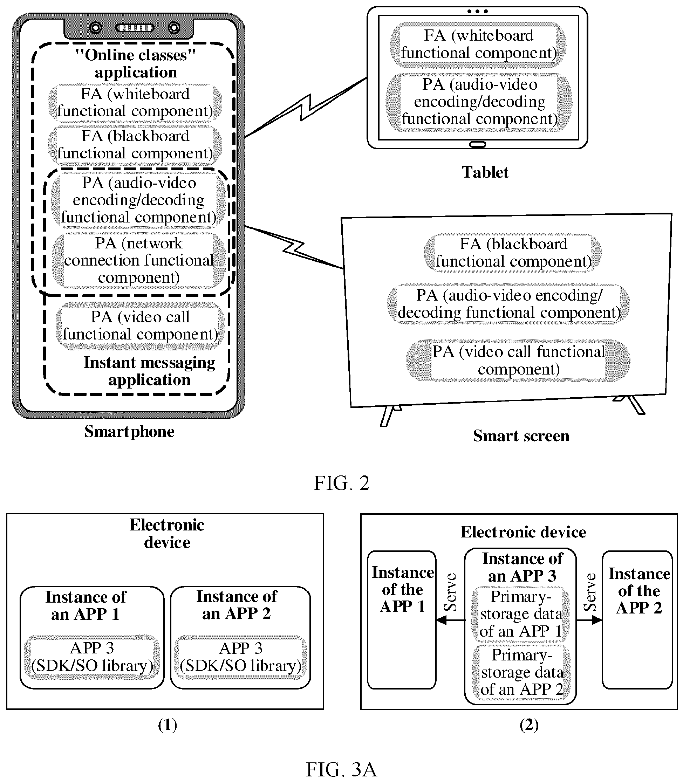

FIG. 2 shows an example of a possible distributed distance education service scenario.

As shown in FIG. 2, the distributed system includes electronic devices such as a smartphone, a tablet, and a smart screen. The devices in the distributed system are connected to each other. Different software operating systems (operating systems, OSs) may be configured for the smartphone, the tablet, and the smart screen. For example, Android^{®} systems may be configured for the smartphone and the tablet, and a Harmony^{®} system may be configured for the smart screen.

"Online classes" is installed in the smartphone. "Online classes" is an application that is installed in an electronic device and that provides a teacher and a student with various functions needed for remote classes. A name of "Online classes" is not limited in this embodiment of this application. "Online classes" may include the following several functional components: a blackboard functional component, a whiteboard functional component, an audio-video encoding/decoding functional component, and a network connection functional component. The blackboard functional component and the whiteboard functional component belong to FAs, and the audio-video encoding/decoding functional component and the network connection functional component belong to PAs. The blackboard functional component provides a function of remote course interpretation. The whiteboard functional component provides a function of remote question answering. The audio-video encoding/decoding functional component provides a function of video-audio encoding/decoding.

On a teacher side, when using "Online classes" on the smartphone, the teacher may enable the blackboard functional component to migrate or switch to the smart screen, to interpret a course on the smart screen.

On a student side, when using "Online classes" on the smartphone, the student may enable the whiteboard functional component to migrate or switch to the tablet, to answer a question on the tablet.

Enabling a functional component to migrate or switch from a device A to another device B may include the following two types: 1. UI migration. When a view UI and service logic that are of an FA are separated from each other, and the device A may run service logic code, the device B may be triggered to run view UI code. It seems to a user that the functional component is enabled to migrate from the device A to the device B. 2. Overall migration. The overall migration refers to that after downloading the functional component from the device A or a network and installing the functional component, the device B runs the functional component and provides a corresponding function.

In the distance education service scenario, "Online classes" is a caller, and a whiteboard functional component in the tablet and a blackboard functional component in the smart screen are callees.

FIG. 2 further shows another possible distributed video call service scenario.

As shown in FIG. 2, another distributed application, for example, an instant messaging application, may be further installed on a smartphone. The instant messaging application may provide a video call function, a voice call function, and another communication function. The instant messaging application may include the following functional components: a video call functional component, an audio-video encoding/decoding functional component, and a network connection functional component.

When using the instant messaging application on the smartphone, a user may enable the video call functional component in the application to migrate or switch to a smart screen, to perform a video call by using a camera and a display of the smart screen.

A blackboard functional component in "Online classes" and the video call functional component in the instant messaging application may be a same functional component. In other words, a functional component in the smart screen may be separately called by "Online classes" and the instant messaging application that are installed on the smartphone.

In the video call service scenario, the instant messaging application is a caller, and a video call functional component (namely, the video call functional component) in the smart screen is a callee.

It should be noted that the service scenarios shown in FIG. 2 are merely for assisting in describing the technical solutions in embodiments of this application. In an actual service scenario, the distributed system shown in FIG. 2 may include more terminal devices, more or fewer functional components may be deployed in each device, and each distributed application may include more or fewer functional components.

Based on the distributed system 10 shown in FIG. 1 and the distributed scenarios shown in FIG. 2, software and hardware abilities of different devices may be integrated, to implement intelligent all-scenario experience.

In the distributed system 10 shown in FIG. 1 and the distributed scenarios shown in FIG. 2, because a functional component may be called across devices, how to ensure secure use of each functional component, how to ensure security of data in each device, how to ensure that the functional component can appropriately access a device resource, and the like are key to ensuring secure resource sharing between the devices in the distributed system, and are also problems to be actually resolved in embodiments of this application. Specific solutions for resolving the foregoing problems are separately described in detail below.

Herein, a resource shared between the devices in the distributed system may include but is not limited to a software resource, a hardware resource, a device peripheral, an accessory resource, or the like.

It may be understood that, in a standalone (that is, a single device) scenario, a functional component and an APP that are inside a device may also call each other, which is not limited to the distributed scenarios shown in FIG. 2.

In the subsequent embodiments of this application, a party that initiates calling of a functional component or an APP may be referred to as a caller. The caller may be, for example, an APP, an FA, or a PA. An initial initiator of an entire call chain may be referred to as the 1^{st} caller. The 1^{st} caller may be, for example, the APP or the FA. For example, the call chain is as follows: An APP 1 calls a PA 1, the PA 1 calls a PA 2, and the PA 2 calls an FA 1. In this case, the APP 1 is the 1^{st} caller. For another example, the call chain is as follows: An FA 1 calls a PA 1, and the PA 1 calls a PA 2. In this case, the FA 1 is the 1^{st} caller.

In the entire call chain, a party that is called in the middle and a party that is called at last may both be referred to as callees. The callee may be, for example, an APP, an FA, or a PA.

In some embodiments of this application, the caller may also be referred to as a subject application, and the callee may also be referred to as an object application.

In the call chain, the caller and the callee may be deployed in a same electronic device, or may be deployed in different electronic devices. In other words, the caller and the callee may be located in a distributed scenario, or may be located in the standalone scenario.

A device in which the caller is located is referred to as a subject device, and a device in which the callee is located is an object device.

An application in the subsequent embodiments may include an APP, and may further include a functional component in a distributed application.

The following describes in detail an access control method provided in embodiments of this application.

An application includes an APP and a functional component. The following two types of data are generated in a running process of the application:

### 1. Memory data

When an electronic device starts up or initiates an instance of the application, corresponding memory data is generated.

The instance is an APP or a functional component in a running status. In embodiments of this application, the instance may be a process, or may be a thread. The process is an execution activity of the application on a computer. The thread is a single sequential control procedure in application execution. One process may include a plurality of threads.

In other words, provided that the application starts to be run, the corresponding instance is generated, and the memory data is generated.

The memory data may be stored in a random access memory (random access memory, RAM) of the electronic device. The RAM is an internal memory that directly exchanges data with a processor, may be read and written at any time at a quite high speed, and is usually used as a temporary data storage medium of an operating system or another program that is being run. The RAM may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a DDR fifth-generation SDRAM, which is usually referred to as a DDR5 SDRAM), and the like.

### 2. Application data

The application data refers to content written in an application running process, for example, a photo or a video obtained by a photographing application, or a text edited by a user in a document application. The application data may also be referred to as file data.

The application data may be stored in a non-volatile memory (non-volatile memory, NVM). The NVM is a memory that can store stored data even if the electronic device is powered off. The NVM may include a magnetic disk storage device and a flash memory (flash memory).

FIG. 3A shows an example of two manners in which APPs call each other in a standalone scenario.

As shown in (1) in FIG. 3A, an APP 1 and an APP 2 are callers, and an APP 3 is integrated into a host APP (namely, a caller) in a form of a third-party library such as a software development kit (software development kit, SDK) library or a dynamic link library (a .so file), to provide a sharing service for the host APP. The sharing service means that the APP 3 serves a plurality of different APPs simultaneously. The third-party library may obtain all resources and permission of the host APP. As a result, there is a problem that the third-party library abuses memory data of the caller.

As shown in (2) in FIG. 3A, each APP has a corresponding instance, and the instances are naturally isolated. (2) in FIG. 3A is used as an example. When three APP instances are installed in an electronic device, the electronic device allocates corresponding virtual address space to different APP instances, and the virtual address space of the different APP instances is mapped to unused physical address space in memory of the electronic device. When the different APP instances are run, the different APP instances access different physical address space in the corresponding memory by using the virtual address space of the different APP instances, and the different APP instances cannot access physical address space of another APP instance by using the virtual address space of the different APP instances, so that the different APP instances are isolated from each other. An APP 3 provides a sharing service for callers (an APP 1 and APP 2) in a single-instance form. In this manner, memory data of the APP 1 and the APP 2 can be isolated only by the APP 3. When vulnerability or malicious behavior occurs in the APP 3, memory data of the APP 1 and the APP 2 may be misused by the APP 3.

In a distributed scenario, when the foregoing manner (1) or (2) is for implementing mutual calling between a caller and a callee, the foregoing problem that memory data of each caller is confused or misused also exists. For example, in the distributed scenarios shown in FIG. 2, a blackboard ability unit (namely, a video call ability unit) in the smart screen may simultaneously obtain data of "Online classes" in the smartphone and memory data of the instant messaging application. The two types of memory data may be misused.

To avoid the confusion or the misuse of the memory data of the caller in the standalone scenario and the distributed scenario, the following embodiments of this application provide an access control method. In the access control method, a same callee may enable a plurality of instances, and serve different callers by using different instances. Due to an attribute of natural isolation between instances, the different instances cannot access memory data of each other. In this way, a system-level memory data security mechanism can be provided, problems of abuse and leakage of the memory data of each caller are avoided, and data security is ensured.

An electronic device allocates physical addresses in a RAM to different instances in a unit of a process. When the electronic device needs to run an instance, the electronic device finds, based on a virtual address, space that is in the RAM and that is correspondingly allocated to the instance, and runs the instance in the space. The virtual address is mapped to a physical address allocated by the electronic device to the instance, and a mapping relationship between the virtual address and the physical address is stored in a controller of the electronic device. In other words, the instance finds an actual storage location of memory data by using the virtual address. In such a mechanism, the different instances can access, by using virtual addresses of the different instances, only physical addresses corresponding to the virtual addresses of the different instances, that is, cannot access physical space of each other in the RAM. Therefore, the instances are isolated from each other.

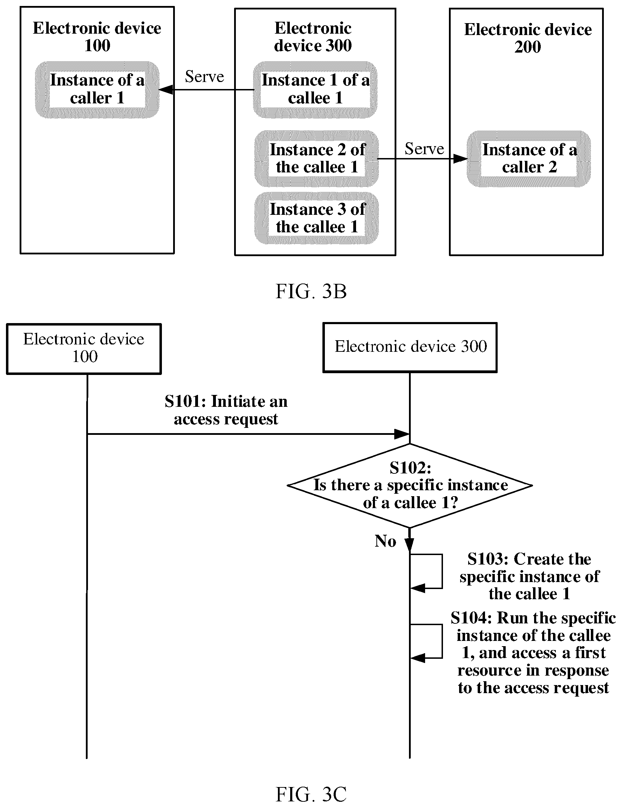

FIG. 3B shows an example of an instance isolation model used when the access control method is implemented according to an embodiment of this application.

As shown in FIG. 3B, a caller 1, a caller 2, and a callee 1 may be installed in a distributed system 10. For meanings of the callers and the callee, and installation devices, refer to the related descriptions in FIG. 1 and FIG. 2. For example, the caller 1, the caller 2, and the callee 1 may be installed in an electronic device 100, an electronic device 200, and an electronic device 300 respectively.

As shown in FIG. 3B, the caller 1 and the caller 2 separately call the callee 1, and the callee 1 is also being run simultaneously. The electronic device 300 creates three instances of the callee 1, to serve the caller 1, the caller 2, and the callee 1 respectively. In this way, memory data of the caller 1 and the caller 2 may be isolated based on an attribute of isolation between instances, to avoid abuse and leakage of the memory data.

FIG. 3C shows an example of a flowchart of the access control method. The method shown in FIG. 3C is described by using an example in which the caller 1 in the electronic device 100 calls the callee 1 in the electronic device 300.

As shown in FIG. 3C, the access control method may include the following steps.

S101: The electronic device 100 initiates an access request to the electronic device 300, where the access request is used by the caller 1 to call the callee 1 and access a first resource in the electronic device 300 by using the callee 1.

The electronic device 100 may initiate the access request in response to a received user operation, or may initiate the access request to the electronic device 300 in a discretionary manner in some cases. This is not limited herein.

In some embodiments, the callee 1 may be installed in the electronic device 300 in advance. In some other embodiments, after receiving the access request sent by the electronic device 100, the electronic device 300 may download the callee 1 from a network and install the callee 1, or directly download the callee 1 from the electronic device 100 and install the callee 1.

In this embodiment of this application, the caller 1 calls the callee 1, and accesses the first resource in the electronic device 300 by using the callee 1. That is, the caller 1 obtains a service provided by the callee 1. The first resource may include a software resource (for example, a facial enhancement algorithm, a positioning function, and an audio-video encoding/decoding function) in the electronic device 300, or may include a hardware resource (for example, hardware such as a camera, an audio device, and a display).

S102: The electronic device 300 determines whether there is a specific instance of the callee 1.

In this embodiment of this application, an object device (namely, the electronic device 300) may enable different instances for different callers, to serve the callers respectively. An instance enabled by the object device for a caller may continuously serve the caller.

Therefore, after receiving the access request, the electronic device 300 may first determine whether there has been an instance that is of the callee 1 and that is enabled for a caller 1. In some embodiments, the electronic device 300 may not only enable the different instances based on the callers, but also enable the different instances based on one or more of the following: subject devices, developers of the callers, users to which the callers belong, accounts of the subject devices, or the like. When one or more of the foregoing are different, the electronic device 300 may enable the different instances of the callee to serve the callers.

For example, the specific instance of the callee 1 may be any one of the following:
1. an instance for serving the caller 1;
2. an instance for serving the caller 1 in the electronic device 100;
3. an instance for serving each caller that belongs to a same developer as the caller 1; and
4. an instance for serving each caller that belongs to the same developer as the caller 1 and that is in the electronic device 100.

It may be understood that the specific instance of the callee 1 may alternatively be created based on information such as the user to which the caller belongs or the account of the subject device. This is not listed one by one herein.

During specific implementation, the electronic device 300 stores a calling relationship in which an instance of the callee 1 is called, where the calling relationship indicates a case in which the callee 1 enables the instance and serves each caller. Therefore, the electronic device 300 may determine, based on the calling relationship, whether there is a specific instance of the callee 1. The calling relationship includes a calling relationship ID, instance information of the callee, and information about the caller that calls the instance.

The calling relationship ID may be allocated by the electronic device 100. For a same calling relationship, the object device (namely, the electronic device 300) and a subject device (namely, the electronic device 100) may share a same calling relationship ID. The calling relationship ID may be carried in the access request in S101, and is allocated by the electronic device 100 and then sent to the electronic device 300.

The instance information of the callee 1 may include an APP ID of the callee 1, and a user identity (user ID, UID) and a process identifier (process identifier, PID) that are of the instance. The PID is an identity of the instance. When running an instance, an electronic device allocates a unique PID to the instance.

The information about the caller includes an application identifier (APP ID) of the caller, and may further include one or more of the following: a device identifier (device ID) of the subject device, a developer signature of the caller, a user identity (user ID, UID) of the caller, and an account (account ID) of the subject device.

The APP ID identifies an APP or a functional component.

The device ID identifies the device. The device ID may be, for example, a name, a serial number, or a media access control (media access control, MAC) address, or the like of the device.

The developer signature identifies a developer.

The UID identifies a user to which the APP or the functional component belongs. The electronic device usually allocates different UIDs to different installed APPs or functional components for differentiation. In some embodiments, the electronic device may allocate a same UID to each APP or functional component developed by a same developer. A same APP or functional component may have different UIDs in different electronic devices.

The account ID identifies a user that currently logs in to the electronic device. For example, the account ID may be a Huawei account.

In this embodiment of this application, the access request in S101 may carry caller information of the caller 1, so that the electronic device 300 checks and determines whether there is a specific instance of the callee 1 in the instance calling relationship of the callee 1.

If a determining result in S102 is no, perform S103; or if a determining result in S102 is yes, perform S104.

S103: The electronic device 300 creates the specific instance of the callee 1.

Specifically, the electronic device 300 starts up and runs a new instance of the callee 1, and uses the instance as the specific instance of the callee 1. For a function of the instance, refer to the related descriptions in S102.

When creating the specific instance of the callee 1, the electronic device 300 may allocate a UID and a PID to the specific instance.

In some embodiments, the electronic device 300 may continue to use the UID of the caller, that is, allocate the UID of the caller to the specific instance of the callee 1. Because the different callers have different UIDs, UIDs of instances created by the callee 1 for the different callers are different.

In some other embodiments, the electronic device 300 may separately allocate the UID to the specific instance of the callee 1. For example, the electronic device 300 may allocate a UID to each APP in a data interval (for example, 10000 to 30000), allocate a UID to an instance (including the specific instance of the callee 1) of each functional component in another data interval (for example, 30001 to 50000), and allocate different UIDs to different instances of a same functional component.

For example, in the instance isolation model shown in FIG. 3B, UIDs allocated by the electronic device 300 to an instance 1, an instance 2, and an instance 3 of the callee 1 are respectively a UID 30000 and a UID 30001.

It can be learned that, in the foregoing two embodiments, the electronic device 300 may differentiate between different instances of a same callee by using UIDs.

In still some other embodiments, the electronic device 300 may directly continue to use a UID allocated to the functional component, that is, directly allocate the UID of the functional component to each instance of the functional component. For example, in the instance isolation model shown in FIG. 3B, all UIDs allocated by the electronic device 300 to an instance 1, an instance 2, and an instance 3 of the callee 1 may be a UID 10000.

In addition, the electronic device 300 allocates different PIDs to different instances, and the PID allocated to the specific instance of the callee 1 may be for differentiating the specific instance from another instance of the callee 1.

After creating the specific instance of the callee 1, the electronic device 300 may store a calling relationship between the caller 1 and the specific instance of the callee 1. The calling relationship may be for checking, when the callee 1 is called again subsequently, whether there has been a corresponding specific instance, and may be further for searching for a cause when a problem occurs.

S104: The electronic device 300 runs the specific instance of the callee 1, and accesses the first resource in response to the access request received in S101.

Specifically, the specific instance of the callee 1 accesses the first resource in the electronic device 300, and serves the caller 1 in the electronic device 100. The first resource may include the software resource (for example, the facial enhancement algorithm, the positioning function, and the audio-video encoding/decoding function) in the electronic device 300, or may include the hardware resource (for example, the hardware such as the camera, the audio device, and the display).

In some embodiments, after accessing the first resource, the electronic device 300 may perform a series of operations based on the resource, for example, display a video call screen by using the display and capture an image by using the camera. In some embodiments, after accessing the first resource, the electronic device 300 may send an access result back to the electronic device 100, for example, send a positioning result or a computing result to the electronic device 100.

It may be understood that, in this embodiment of this application, the subject device (namely, the electronic device 100) may also store the calling relationship between the caller 1 and the specific instance of the callee 1, but does not need to store detailed UIDs and PIDs of the instances of the callee like the object device. For an example of the calling relationship stored in the subject device and the object device, refer to related descriptions in subsequent Table 1 and Table 2. Details are not described herein again.

According to the method shown in FIG. 3C, when the callee 1 in the electronic device 300 is called by different callers, a plurality of instances of the callee 1 may be initiated, to separately serve the callers. In addition, memory data isolation at different granularities is implemented respectively when definitions of the specific instance of the callee 1 in S102 are different.

For example, the foregoing first type of the specific instance of the callee 1 may implement that one instance of the callee 1 serves only a same caller, to provide system-level memory data isolation of different callers.

The foregoing second type of the specific instance of the callee 1 may implement that one instance of the callee 1 serves only a same caller in a same device, to provide system-level memory data isolation of different devices and/or different callers.

The foregoing third type of the specific instance of the callee 1 may implement that one instance of the callee 1 serves only a same caller developed by a same developer, to provide system-level memory data isolation of different developers and/or different callers.

The foregoing fourth type of the specific instance of the callee 1 may implement that one instance of the callee 1 serves only a same caller developed by a same developer in a same device.

It may be understood that the caller 1 and the callee 1 may alternatively be located in a same device in some other embodiments of this application, which is not limited to that the caller 1 and the callee 1 are located in different devices in FIG. 3C. When the caller 1 and the callee 1 are located in the same device, the device may independently perform all steps shown in FIG. 3C.

In the method shown in FIG. 3B, when a plurality of electronic devices call a same callee in a same electronic device, an electronic device (for example, the electronic device 100) in the plurality of electronic devices may be referred to as a first device, a caller in the first device may be referred to as a first caller, another electronic device (for example, the electronic device 200) in the plurality of electronic devices may be referred to as a second device, and a caller in the second device may be referred to as a second caller. An accessed electronic device (for example, the electronic device 300) may be referred to as a third device, and an accessed resource in the third device may be referred to as the first resource. The access request sent by the first device to the third device may be referred to as a first access request, and an access request sent by the second device to the third device may be referred to as a second access request.

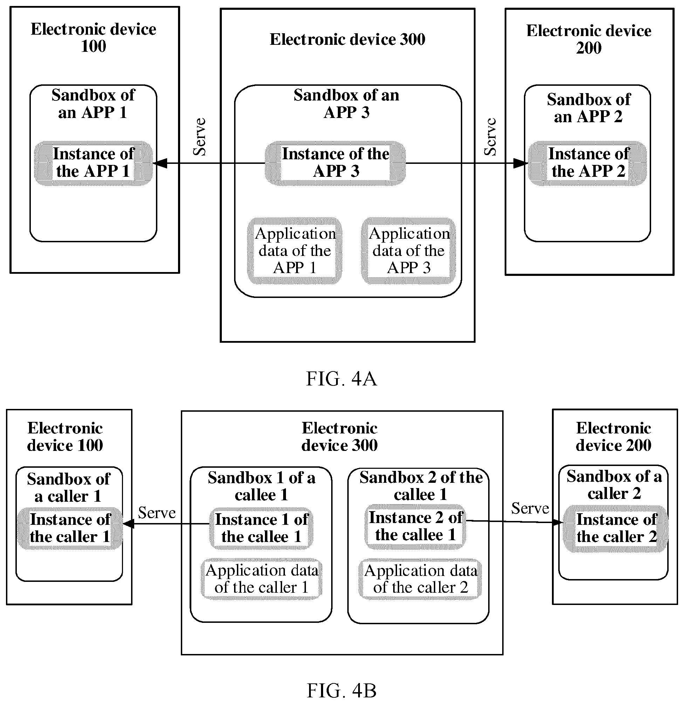

FIG. 4A shows an example of a manner of isolating application data when APPs call each other in a standalone scenario.

As shown in FIG. 4A, each APP in a single device is run in an instance of the APP, and an electronic device creates an independent sandbox for each of different APPs, where the sandbox is for storing application data generated in a running process of the corresponding APP. Sandboxes are isolated from each other, and cannot access each other, so that application data is protected. As shown in FIG. 4A, when serving an APP 1 and an APP 2, an APP 3 may receive application data transferred by the APP 1 and the APP 2, and the application data is all stored in a sandbox of the APP 1. In this manner, application data from the APP 2 and the APP 3 can be isolated only by relying on the callee 1. When vulnerability or malicious behavior occurs in the APP 3, the application data of the APP 1 and the APP 2 may be misused by the APP 3, and system-layer security isolation cannot be provided.

In a distributed scenario, the manner shown in FIG. 4A is used, a callee isolates application data of different callers, and there is also a problem of confusion or misuse of the application data of the callers.

To avoid confusion or misuse of memory data of the callers in the standalone scenario and the distributed scenario, in some embodiments, when the access control method shown in FIG. 3C is performed, a callee may further isolate application data of callers. Specifically, after a same callee enables a plurality of instances, and serves different callers by using different instances, different sandboxes may be further created for the different callers, and application data from the different callers is stored in the corresponding sandboxes. Due to an attribute of natural isolation between sandboxes, the different sandboxes cannot access application data of each other. In this way, an application data security mechanism can be provided, and problems of abuse and leakage of application data of each caller are avoided.

A sandbox is an independent operating environment that restricts program behavior according to a security policy. An instance is run in the sandbox, and application data generated in a running process of the instance is also stored in the sandbox.

The sandbox uses an access control list (access control list, ACL) to define a discretionary access control (discretionary access control, DAC) policy. The DAC policy defines database objects and types of operations, where a user may perform the types of operations on the database objects. Specifically, each user may belong to a group, and each file correspondingly has an owner user. A list of users that may perform some operations on a file may be listed. The user identifies an owner user of the file, a user in a same group, and operation permission of another user on the file. The user herein is for the file, and actually represents an application or a functional component.

An electronic device allocates different virtual address space to different instances in a unit of a process to form sandboxes. Virtual address space of a sandbox of a same instance is mapped to the physical address in the RAM and a physical address in the NVM. A specific mapping manner is not limited. When running an instance and generating application data, the electronic device finds, based on a virtual address, physical space that is in the NVM and that is correspondingly allocated to the instance, and stores the application data in the space. In other words, the instance finds an actual storage location of the application data by using the virtual address. In such a mechanism, the different instances cannot learn of or access a virtual address of another sandbox, and therefore cannot access physical space of each other in the NVM. Therefore, the instances are isolated from each other.

The different sandboxes are naturally isolated from each other, and cannot access each other. Therefore, an application data security isolation mechanism may be provided.

It may be understood that the sandbox is merely a term provided in embodiments of this application, a meaning of the sandbox has been clearly explained above, and a name of the sandbox does not limit a function of the sandbox.

FIG. 4B shows an example of a sandbox isolation model in a distributed system according to an embodiment of this application.

As shown in FIG. 4B, an electronic device 300 creates two sandboxes after creating two instances of a callee 1. A sandbox 1 is for running an instance 1 that serves a caller 1, and is further for storing application data from the caller 1. A sandbox 2 is for running an instance 2 that serves a caller 2, and is further for storing application data from the caller 2. In this way, the application data of the caller 1 and the caller 2 may be isolated based on an attribute of isolation between sandboxes, to avoid abuse and leakage of the application data.

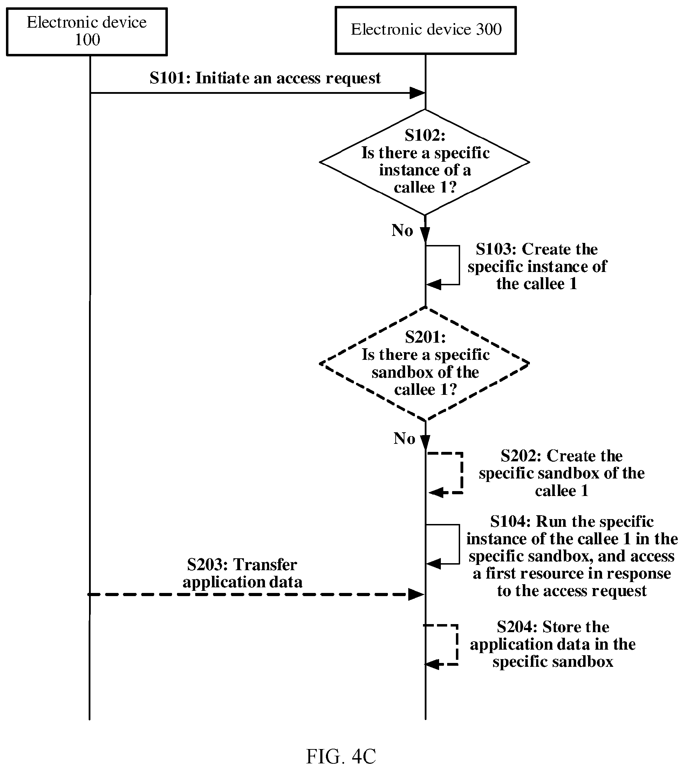

Refer to FIG. 4C. In the access control method shown in FIG. 3C, before S104, a procedure shown in FIG. 4C may be further performed. As shown in FIG. 4C, the procedure may include the following steps.

S201: The electronic device 300 determines whether there is a specific sandbox of the callee 1.

In this embodiment of this application, the object device (namely, the electronic device 300) may create different sandboxes for the different callers, and provide application data storage services and instance running services for the callers respectively. A sandbox created by the object device for a caller may continuously serve the caller.

Therefore, after receiving the access request in S101 in FIG. 3C, or after creating the specific instance of the callee 1 in S103, the electronic device 300 may first determine whether there is a sandbox that is of the callee 1 and that is created for the caller 1.

In some embodiments, the electronic device 300 may not only create the different sandboxes based on the callers, but also create the different sandboxes based on one or more of the following: the subject devices, the developers of the callers, the users to which the callers belong, the accounts of the subject devices, or the like. When one or more of the foregoing are different, the electronic device 300 may create the different sandboxes to provide the application data storage services and the instance running services for the callers.

For example, the specific sandbox of the callee 1 may be determined based on the specific instance that is of the callee 1 and that is created in S103 in FIG. 3C. For example, the specific sandbox of the callee 1 may be any one of the following:
1. a sandbox for storing application data from the first type of specific instance, when the specific instance of the callee 1 is of the first type in S102;
2. a sandbox for storing application data from the second type of specific instance, when the specific instance of the callee 1 is of the second type in S102;
3. a sandbox for storing application data from the third type of specific instance, when the specific instance of the callee 1 is of the third type in S102; and
4. a sandbox for storing application data from the fourth type of specific instance, when the specific instance of the callee 1 is of the fourth type in S102.

It may be understood that the specific sandbox of the callee 1 may alternatively be created based on the information such as the user to which the caller belongs or the account of the subject device. This is not listed one by one herein.

During specific implementation, the electronic device 300 stores a correspondence between a sandbox of the callee 1 and an instance that is run in the sandbox. The correspondence indicates a status in which the sandbox of the callee 1 provides the application data storage service and the instance running service. Therefore, the electronic device 300 may determine, based on the correspondence relationship, whether there is a specific sandbox of the callee 1. The correspondence includes a sandbox identifier, instance information of the callee that is run in the sandbox, and information about each caller that calls the instance. Application data stored in the sandbox includes application data from the caller that runs the instance in the sandbox.

If a determining result in S201 is no, perform S202; or if a determining result in S201 is yes, perform S203.

S202: The electronic device 300 creates the specific sandbox of the callee 1.

Specifically, the electronic device 300 creates a sandbox of the caller 1, and uses the sandbox as the specific sandbox of the callee 1. For a function of the sandbox, refer to the related descriptions in S201. That the electronic device 300 creates a sandbox means that the electronic device 300 separately creates a storage area or an operating environment.

When creating the specific sandbox of the callee 1, the electronic device 300 may allocate a sandbox identifier to the specific sandbox.

After creating the specific sandbox of the callee 1, the electronic device 300 may store the correspondence between the sandbox of the callee 1 and the instance that is run in the sandbox.

After S202, when performing S104 in FIG. 3C, the electronic device 300 runs the corresponding instance of the callee 1 in the specific sandbox of the caller 1.

S203: In a process in which the caller 1 in the electronic device 100 calls the callee 1 in the electronic device 300, the specific instance of the callee 1 in the electronic device 300 obtains application data.

In some embodiments, the application data may be directly transferred by the caller 1 to the callee 1, or may be generated by the callee 1 in a discretionary manner in a calling process. This is not limited herein.

S204: The electronic device 300 stores the application data in the specific sandbox of the callee 1.

Specifically, the specific sandbox of the callee 1 is for storing the application data of the corresponding specific instance, and only a caller of the specific instance is allowed to access the application data.

According to the method shown in FIG. 4C, application data isolation at different granularities may be implemented respectively when definitions of the specific sandbox of the callee 1 are different.

For example, the foregoing first type of specific sandbox of the callee 1 may implement that one sandbox of the callee 1 stores only application data from a same caller, to provide application data isolation of different callers.

The foregoing second type of specific sandbox of the callee 1 may implement that one sandbox of the callee 1 stores only application data from a same caller in a same device, to provide application data isolation of different devices and/or different callers.

The foregoing third type of specific sandbox of the callee 1 may implement that one sandbox of the callee 1 stores only application data from a same caller developed by a same developer, to provide application data isolation of different developers and/or different callers.

The foregoing fourth type of specific sandbox of the callee 1 may implement that one sandbox of the callee 1 stores only application data from a same caller developed by a same developer in a same device.

It may be understood that the caller 1 and the callee 1 may alternatively be located in a same device in some other embodiments of this application, which is not limited to that the caller 1 and the callee 1 are located in different devices in FIG. 4C. When the caller 1 and the callee 1 are located in the same device, the device may independently perform all steps shown in FIG. 4C.

In the method shown in FIG. 4C, in the third device, a sandbox for running a first instance may be referred to as a first sandbox, and a sandbox for running a second instance may be referred to as a second sandbox. Application data generated by the third device in a process of running the first instance may be referred to as first application data, and application data generated by the third device in a process of running the second instance may be referred to as second application data.

An FA is developed in MVVM (model-view-view-model) mode, abstracts a status and behavior that are of a view (view), and separates a view UI from service logic. In other words, UI code and logic code that are of the FA are separated from each other. Therefore, a device in which the FA is located has only the logic code, and the UI code is integrated into code of a caller. When the FA is run, the UI code of the FA communicates with the logic code of the FA, to obtain data for UI display.

For example, a distributed system may include a mobile phone and a smartwatch. A food delivery APP may be installed in the smartwatch. When running the food delivery APP, the smartwatch may provide a positioning page for a user to view a location of delivery personnel. Positioning data needed when the smartwatch displays the positioning page may be obtained by the mobile phone by running the logic code. In other words, the food delivery APP in the smartwatch is used as a caller, and integrates the UI code of the FA that implements a positioning function, and the logic code is deployed in the mobile phone.

Currently, several common running manners of the FA cause potential risks of permission expansion and data leakage of a subject device. For example, data leakage is caused because the UI code of the FA obtains sensitive data by using permission of the caller, and transfers the sensitive data to the logic code of the FA. For another example, data leakage is caused because the logic code of the FA sends important service data to the UI code, where the service data may be maliciously obtained by the callee.

To avoid a data leakage problem caused by the MVVM mode of the FA, the following several methods are commonly used:
(1) Insert a monitor (monitor) into the caller, where the monitor is configured to control available permission of the UI code of the FA.

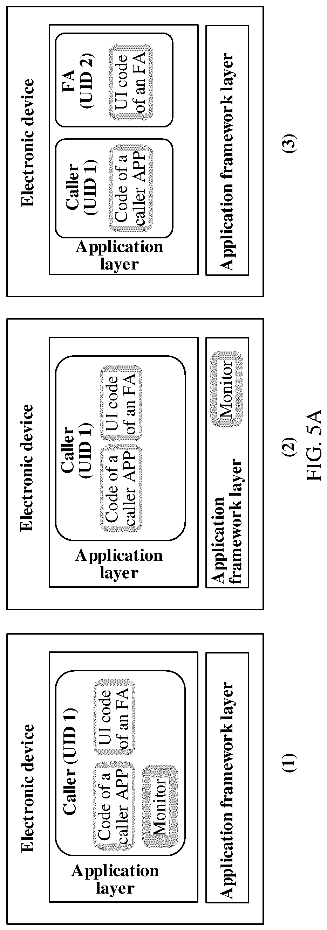

(1) in FIG. 5A shows a scenario of the manner (1). In this manner, permission of the UI code of the FA is controlled at an application layer, and security is insufficient. In addition, because the UI code of the FA and the caller are still run in a same instance, the data leakage risk cannot be avoided.

(2) Insert a monitor at a framework layer, where the monitor is configured to control available permission of the UI code of the FA.

(2) in FIG. 5A shows a scenario of the manner (2). Although security of the framework layer is higher, the framework layer cannot differentiate integrated code well, and the data leakage risk still cannot be avoided.

(3) When the code of the caller and the UI code of the FA are run, the code of the caller and the UI code of the FA are split into two completely isolated applications.

(3) in FIG. 5A shows a scenario of the manner (3). After the code of the caller and the UI code of the FA are split into two independent applications, to ensure interface implementation that corresponds when the caller calls the FA, an interface implemented by the UI code of the FA needs to cover the caller. A coverage effect is poor for a non-regular interface. In addition, UI code of each FA generates a new application separately. This consumes excessive system performance, and is not suitable for actual deployment.

In the foregoing three manners, the UI code of the FA and the code of the caller belong to a same security domain (security domain). After a conventional discretionary access control (discretionary access control, DAC) policy becomes invalid, there is still a data leakage risk between the caller and the FA.

To avoid the data leakage risk between the caller and the FA shown in FIG. 5A, in some embodiments, when the method shown in FIG. 3C is performed, if the caller calls the FA, the subject device creates an instance for the caller, creates an instance for UI code of the caller, and does not change a user identity (UID) to which the two instances belong, but partitions different security domains for the two instances. The two instances have a same UID. Therefore, the caller and the UI code of the FA may be isolated based on different instances without adding a new application or causing large system performance loss. In addition, isolation of the security domains is for ensuring that the caller and FA cannot maliciously obtain data of each other, to avoid data leakage.

The security domain is located at a kernel layer, and is a set of logical zones that are in a same working environment, have same or similar security protection requirements and protection policies, trust each other, are associated with each other, or interact with each other. The security domain may be considered as a kernel-level sandbox, and provides kernel-level security isolation. Neither the user nor an application can change an access policy of the security domain. Access control between security domains is implemented based on a mandatory access control (mandatory access control, MAC) policy. The MAC policy defines which subject can access which object. In addition, the policy can be enforced only by a device system, and cannot be changed by any user or application. Therefore, different security domains can implement kernel-level isolation, and provide a system-level security mechanism.

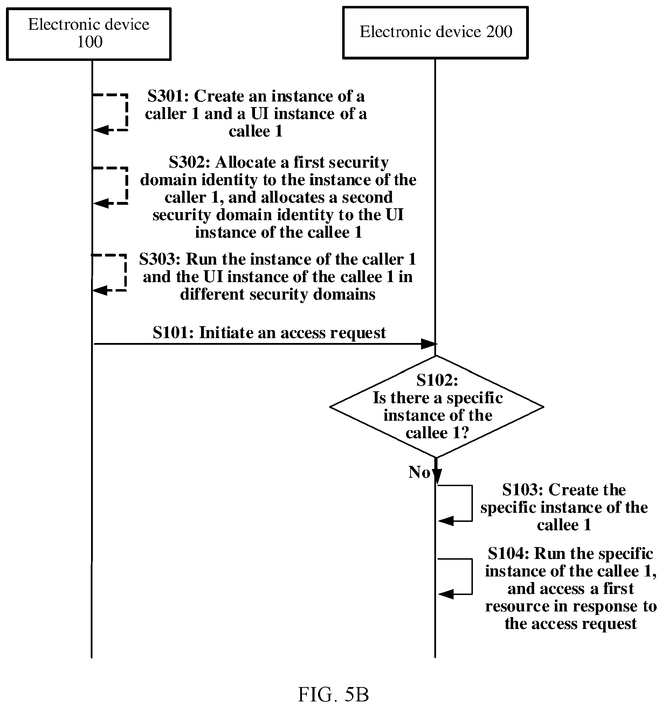

Refer to FIG. 5B. In the access control method shown in FIG. 3C, before S101, the electronic device 100 may further perform a procedure shown in FIG. 5B. In the procedure shown in FIG. 5B, the callee 1 is an FA.

As shown in FIG. 5B, the procedure may include the following steps.

S301: The electronic device 100 creates an instance of the caller 1 and a UI instance of the callee 1.

Specifically, the electronic device 100 runs code of the caller 1, to create the instance of the caller 1. In addition, the electronic device 100 may further run UI code that is of the callee 1 and that is integrated into the caller 1, to create the UI instance of the callee 1.

In some embodiments, the electronic device 100 may allocate a same UID to the instance of the caller 1 and the UI instance of the callee 1, and may allocate different PIDs to the two instances.

The electronic device 100 runs the instance of the caller 1 in a first permission range, and runs a UI instance of the callee 1 in a second permission range. The second permission range is different from the first permission range. In the method shown in FIG. 5B, the UI instance of the callee 1 may be referred to as a first part of the callee, and service logic code of the callee in the third device may be referred to as a second part of the callee. The instance of the caller 1 may be referred to as a third instance, and the UI instance of the callee 1 may be referred to as a fourth instance.

Because the electronic device 100 runs the instance of the caller and the UI instance of the callee 1 in different permission ranges, the UI instance of the callee 1 can be prevented from obtaining data beyond the permission range of the UI instance of the callee 1, a permission expansion problem is avoided, and security of data can be ensured.

S302: The electronic device 100 allocates a first security domain identity to the instance of the caller 1, and allocates a second security domain identity to the UI instance of the callee 1.

Specifically, the electronic device 100 allocates or creates a plurality of security domains at a kernel layer, where each security domain corresponds to a security domain identity (namely, an identifier). For example, a first security domain corresponds to the first security domain identity, and a second security domain corresponds to the second security domain identity.

Different security domains are isolated from each other. Each security domain defines data or processes and types of operations, where a user may perform the types of operations on the data or the processes. For example, a security domain identity is allocated to each newly created process. When a process accesses a specific file or directory and performs inter-process communication with another process, whether to allow a process in the security domain to perform the operations is determined according to an access control rule defined in a security policy file. The different security domains may correspond to different access control rules. For the different security domains, processes in the different security domains cannot access each other.

In some embodiments, the electronic device 100 may respectively allocate different security domain identifiers to the instance of the caller 1 and the UI instance of the callee 1 only when determining that developers of the caller 1 and the callee 1 are different, and may allocate a same security domain identifier to the instance of the caller 1 and the UI instance of the callee 1 when the developers of the caller 1 and the callee 1 are the same. In this way, it can be ensured that data between a caller and a callee that are developed by different developers is not leaked, and a resource consumed for security domain identifier allocation is reduced when developers of the caller and the callee are the same.

S303: The electronic device 100 runs the instance of the caller 1 in the first security domain based on the first security domain identity, and runs the UI instance of the callee 1 in the second security domain based on the second security domain identity.

According to the method shown in FIG. 5B, because two instances are run in different security domains and cannot communicate with each other, when the caller 1 calls the callee 1 in the electronic device 300, a case in which UI code of the FA obtains sensitive data by using permission of the caller and then transfers the sensitive data to logic code of the FA, the logic code of the FA sends important service data to the UI code of the FA, then important service data is maliciously obtained by the callee, and so on does not occur, so that data leakage is avoided.

Generally, when a caller calls a callee, a user can authorize the caller. Then the caller transfers the permission to the callee. Then the callee accesses a device resource with the permission, and serves. When a status (including foreground running, background running, stopped running, and the like) of the caller changes, a permission range of the caller also changes actually. If a running status of the callee does not change with the caller, a permission range of the callee may be different from the actual permission range of the caller, and problems such as data abuse and leakage are caused.

Refer to (2) in FIG. 3A, in a standalone scenario, the callee serves each caller in a form of an independent instance. In this manner, callers are not differentiated, the running status of the callee cannot be synchronously changed based on statuses (for example, a foreground and a background) of the callers, and restoration processing cannot be performed on the callee when the callee fails to be called.

To avoid a problem that the permission range of the caller is expanded in the standalone scenario and a distributed scenario, in some embodiments, when the access control method shown in FIG. 3C is performed, a same callee enables a plurality of instances. After different instances are for serving different callers, a relationship of calling the callee by the caller may be referred to as a calling task, and the calling task forms a task subsystem. In addition, in the task subsystem, a running status of the instance of the callee may change with the running status of the caller in the task subsystem. In addition, the callee may be further restored by using the task subsystem.

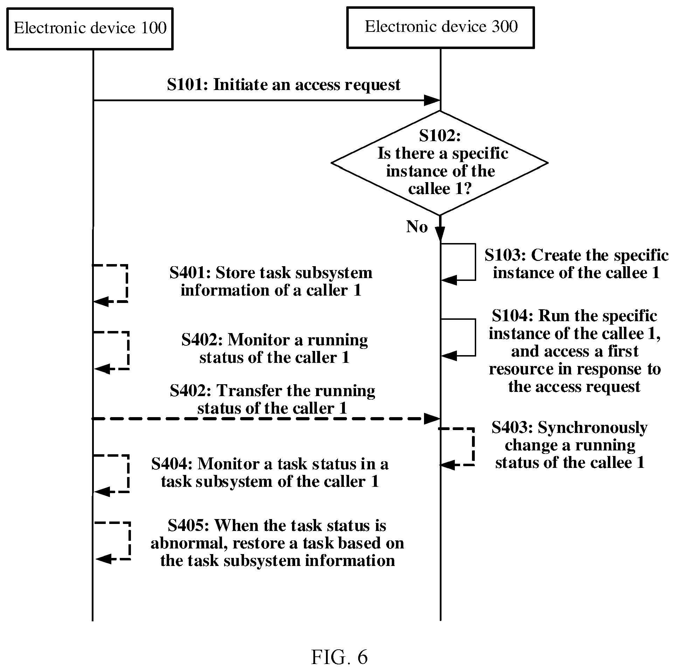

Refer to FIG. 6. In the access control method shown in FIG. 3C, after S101, a procedure shown in FIG. 6 may be further performed. As shown in FIG. 6, the procedure may include the following steps.

S401: The electronic device 100 stores task subsystem information of the caller 1.

After S101 to S103 shown in FIG. 3C are performed, a caller in the electronic device 100 and the specific instance of the callee 1 that is run in the electronic device 300 form a logical task subsystem. An event that the caller 1 in the electronic device 100 calls the callee 1 in the electronic device 300 may be referred to as a task.

It may be understood that one caller may have a plurality of task subsystems.

Task subsystem information that is of the caller and that is stored in the electronic device 100 may include a task subsystem ID, a calling relationship ID, an APP ID of the caller, an APP ID of a callee, a task status, and the like.

The task subsystem ID and the calling relationship ID may be allocated by the electronic device 100.

The task status may include: normal, abnormal, and the like. Abnormal task states may be further classified into more types, for example, a shutdown of an object device and a callee launching failure.

S402: The electronic device 100 monitors a running status of the caller 1, and transfers the running status of the caller 1 to the electronic device 300 based on a device ID of an object device in the task subsystem information of the caller 1.

A running status of the caller (for example, the caller 1) may include foreground running, background running, stopped running, and the like.

In some embodiments, the electronic device 100 may continuously or periodically monitor the running status of the caller 1.

In some embodiments, the electronic device 100 may periodically send, to the electronic device 300, the running status that is of the caller 1 and that is detected through monitoring, or may send the running status of the caller 1 to the electronic device 300 when detecting, through monitoring, that the running status of the caller 1 changes.

S403: The electronic device 300 synchronously changes a running status of the callee 1 based on the running status of the caller 1.

Specifically, the electronic device 300 may change the running status of the callee 1 to be consistent with that of the caller 1. For example, when the caller 1 in the electronic device 100 is run in a foreground, the callee 1 in the electronic device 300 is also run in the foreground; when the caller 1 in the electronic device 100 is runs in a background, the callee 1 in the electronic device 300 is also run in the background; or when the caller 1 in the electronic device 100 stops running, the callee 1 in the electronic device 300 also stops running.

After the running status of the callee 1 changes, permission of the callee 1 also changes correspondingly. The running statuses of the called callee and the caller are kept consistent, expansion of a permission range of the callee can be avoided, and problems such as data abuse and leakage can be avoided.

S404: The electronic device 100 monitors a task status in a task subsystem of the caller 1.

The task status in the task subsystem of the caller 1 may include two types: normal and abnormal. The abnormal task state refers to a case in which the task cannot be normally executed, and may be caused by any one of the following: The electronic device 300 is shut down or faulty, the specific instance that is of the callee 1 and that is created by the electronic device 300 for the caller 1 in the electronic device 100 abnormally exits or fails to be started up, or the like.

S405: When the task state in the task subsystem of the caller 1 is abnormal, the electronic device 100 restores the task based on the task subsystem information of the caller 1.

A method for restoring, by the electronic device 100, the task status in the task subsystem of the caller 1 may include any one of the following:
1. The electronic device 100 indicates an original object device (namely, the electronic device 300) in the task subsystem to re-create the specific instance of the callee 1 in S103 in FIG. 3C, and transfers an identifier (including a UID and/or a PID) of the specific instance of the callee 1 in S103 to the electronic device 300. The electronic device 300 may re-create the specific instance of the callee 1, and allocate the identifier to the specific instance. In this way, the task in the task subsystem of the caller 1 can be completely restored, and is the same as that before, and resource calling in the task subsystem is not affected.
2. The electronic device 100 indicates an appropriate electronic device in the distributed system 10 to create the specific instance of the callee 1 in S103 in FIG. 3C, and transfers an identifier (including a UID and/or a PID) of the specific instance of the callee 1 in S103 to the appropriate electronic device. The appropriate electronic device creates the specific instance of the callee 1, and allocates the identifier to the specific instance. In this way, from a perspective of the electronic device 100, the task in the task subsystem of the caller 1 may be restored across devices, and resource calling in the task subsystem is not affected although a device in which the called callee 1 is located changes.

Herein, the appropriate electronic device may include an electronic device that is selected by the electronic device 100 from the distributed system according to a selection policy and that is installed with the callee 1 or that can be installed with the callee 1. The selection policy is not limited in this embodiment of this application. For example, the selection policy may be selecting a device with most available resources or a device closest to the electronic device 100.

It may be understood that either S402 and S403 or S404 and S405 may be implemented in this embodiment of this application. When both are implemented, a sequence thereof is not limited in this application.

In the method shown in FIG. 6, a running status of the caller 1 before change may be referred to as a first running status, and a running status of the caller 1 after the change may be referred to as a second running status.

The electronic device that is for re-creating the specific instance of the callee 1 and that is involved when the electronic device 100 restores the task in S405 may be referred to as a fourth device. Specifically, the first device may send a fifth access request to the fourth device, so that the fourth device creates the specific instance of the callee 1, and accesses a third resource in the fourth device, where the specific instance may be referred to as a fifth instance of the callee.

When a caller calls a callee, it should be ensured that permission of the callee is consistent with as that of the caller. For example, when the caller does not have camera permission, the callee does not have the camera permission either. Therefore, an object device needs to maintain/obtain permission information granted by the caller in a subject device, performs a permission check on the caller when receiving an access request initiated by the caller, and may respond to the access request only after the check succeeds. In this way, permission consistency between the caller and the callee can be ensured, and user privacy and data security can be protected.

Currently, the following several solutions are available to enable the callee to obtain the permission:
(1) In a distributed system, the callee applies to a user for the permission separately. However, because some callees, such as a PA, do not include a UI, some callees cannot independently apply to the user for the permission.
(2) In a distributed system, the caller APP transfers the permission thereof to the callee. However, in the distributed system, if the callee serves different callers APPs in a form similar to (2) in FIG. 3A and in a single-instance manner, a single instance of the callee may obtain permission of the different callers APPs, and there is a permission expansion problem.
(3) In a standalone system, an independent permission management service is for managing permission in a calling process. Specifically, when serving the caller, the callee determines, from the permission management service, whether the callee has the corresponding permission. This needs the permission management service to synchronize authorization statuses and access policies of devices, and additional time overheads are generated.
(4) In a cloud service platform, when the caller accesses a resource, the caller transfers the permission thereof to the callee. However, this solution also has a problem of permission expansion that occurs when a same callee serves different callers. In addition, in such a permission transfer solution, the transferred permission cannot be accurately revoked, and a life cycle of the permission cannot be accurately ensured.

To avoid the foregoing problem in a standalone scenario and a distributed scenario, in some embodiments, when the access control method shown in FIG. 3C is performed, a same callee enables a plurality of instances, and different instances are for serving different callers. Then, the caller may transfer permission thereof to the corresponding instance of the callee, and an instance of the caller can serve only the corresponding caller by using the permission, but cannot serve another caller. In this way, the permission of the callee can be consistent with the permission of the caller, a permission expansion risk caused by the single instance can be eliminated, data security can be ensured, and time overheads can be avoided in a threading transfer manner.

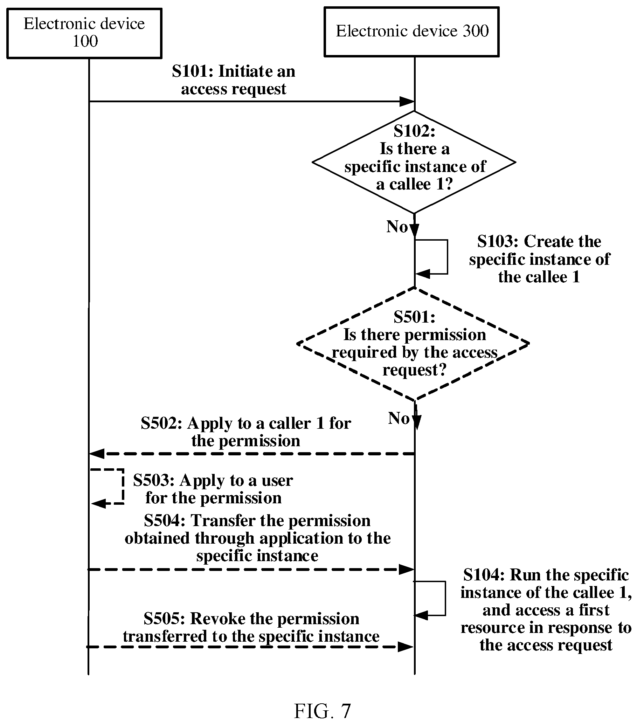

Refer to FIG. 7. In the access control method shown in FIG. 3C, before S104, a procedure shown in FIG. 7 may be further performed. As shown in FIG. 7, the procedure may include the following steps.

S501: The electronic device 300 checks whether there is permission required by the access request received in S101.

For example, when the access request initiated by the electronic device 100 is for implementing a video call on the electronic device 300 side, the electronic device 300 first needs to obtain permission to access a camera and an audio device.

Specifically, before performing S104 in FIG. 3C, the electronic device 300 may first determine whether the electronic device 300 has the permission corresponding to the access request. If the electronic device 300 does not have the permission, subsequent steps may be performed.

S502: The electronic device 300 applies, based on the calling relationship, to a caller 1 in the electronic device 100 for the permission required by the access request.

S503: The electronic device 300 applies to a user for the permission required by the access request.

In this embodiment of this application, a manner in which the electronic device 100 applies to the user for the permission is not limited. For example, the electronic device 100 may apply to the user for the permission by using a UI or a voice. When granting the permission, the user can set a life cycle, namely, time validity, of the permission. The time validity may include, for example, temporary validity and permanent validity. The temporary validity means that the caller 1 in the electronic device 100 has, only in a temporary period (for example, a current calling period), permission to access the resource corresponding to the access request. The permanent validity means that the caller 1 in the electronic device 100 has, in a running period, permission to access the resource corresponding to the access request. Herein, the life cycle of the permission granted by the user may be a first time period. That is, the first caller has, in the first time period, the permission to access the first resource.

S504: The electronic device 100 transfers the permission required by the access request and obtained through application to the specific instance of the callee 1 in the electronic device 300.

In some embodiments, the electronic device 100 may create a routing agent. The routing agent represents a path from the caller 1 in the electronic device 100 to the callee 1 in the electronic device 300. The electronic device 100 may transfer, based on the routing agent, the permission obtained by the caller 1 to the callee 1 in the electronic device 300.

After receiving the permission transferred by the electronic device 100, the electronic device 300 may learn that the specific instance of the callee 1 has the permission when serving the caller 1 in the electronic device 100, but does not have the permission when serving another caller.

Therefore, in some embodiments, when performing S104, the electronic device 300 may first determine that the specific instance of the callee 1 has the permission required by the access request, then run the specific instance of the callee 1, and access the first resource in response to the access request received in S101.

In some other embodiments, the electronic device 100 may perform S503 before sending the access request in S101 in FIG. 3C, carry information about the permission obtained through application in the access request, and send the information about the permission and the access request to the electronic device 300.

Through the foregoing several steps, the electronic device 300 may independently complete a permission check, and the electronic device 100 may independently complete permission application, and does not need to apply to a third-party device or a module for a permission check, so that the third-party device does not need to synchronize permission information of both parties. In this way, a delay in a calling process can be reduced, and device data security can be improved.

In some other embodiments, the electronic device 100 and the electronic device 300 may further manage permission in a calling process based on a permission management service of a third party. Specifically, the permission management service may first synchronize permission information of the electronic device 100 and the electronic device 300. Then the electronic device 100 applies for the permission. The electronic device 300 checks the permission based on the permission management service.

In some embodiments, the method shown in FIG. 7 may further include the following step.

S505: The electronic device 100 revokes the permission transferred to the specific instance of the callee 1 in the electronic device 300 in S501.

In some embodiments, the electronic device 100 may immediately revoke the permission after the life cycle of the permission ends.

In some embodiments, the electronic device 100 may revoke, by using the created routing agent, the permission transferred by the caller 1 in the electronic device 100 to the callee 1 in the electronic device 300.

Specifically, the electronic device 100 may send a message to the electronic device 300, to notify the electronic device 300 to revoke the permission, so that the electronic device 300 no longer has the permission.

In this way, it can be ensured that the specific instance of the callee 1 can appropriately use the permission transferred by the caller 1, to avoid permission expansion.

To enable a callee to obtain permission information of a caller, a possible solution is that permission information of all local APPs is synchronized to a peer device after each device in a distributed system establishes a connection. In addition, when permission of the local APP dynamically changes (where for example, a user revokes the permission or opens the permission), a local device synchronizes or updates permission information across devices one by one based on a maintained connected-device list. Such an overall synchronization mode involves a large amount of data and frequent operations, and causes extremely high consumption of memory and performance.

To reduce a burden of permission synchronization, in some embodiments, when the access control method shown in FIG. 3C is performed, and the electronic device 100 initiates the access request to the electronic device 300, the electronic device 300 may actively obtain permission information of the caller from the electronic device 100, and the electronic device 100 simultaneously records that the electronic device 300 obtains the permission information of the caller. In addition, when permission of the caller dynamically changes, updated permission information is synchronized to the recorded electronic device 300. In this manner of synchronizing the permission information based on a calling requirement, only permission information in a calling request needs to be synchronized, so that synchronized data and consumption of memory and performance can be reduced.

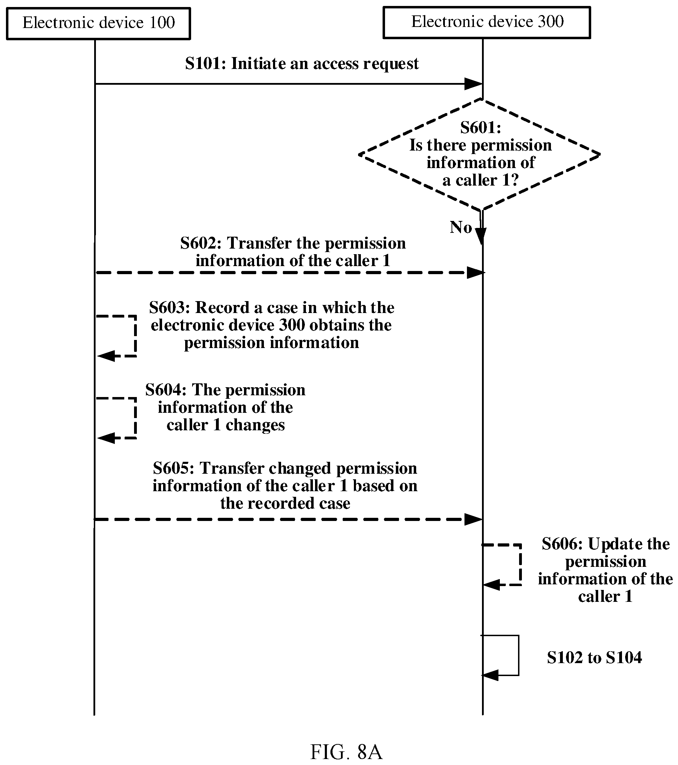

Refer to FIG. 8A. In the access control method shown in FIG. 3C, after S101, a procedure shown in FIG. 8A may be further performed. As shown in FIG. 8A, the procedure may include the following steps.

S601: The electronic device 300 checks whether permission information that is of the caller 1 and that is required by the access request to be sent in S101 is stored.

If no, S602 and S603 are performed.

S602: The electronic device 300 obtains the permission information of the caller 1 from the electronic device 100, and records the permission information of the caller 1 in the electronic device 100.

Specifically, the electronic device 300 may first send a permission request to the electronic device 100. Then the electronic device 100 sends the permission information of the caller 1 in the electronic device 100 to the electronic device 300 in response to the request.

The permission information of the caller 1 in the electronic device 100 records an accessible device resource. Permission may be set by a user in a process of operating and controlling the electronic device 100, or may be set by the caller 1 by default.

In some other embodiments, the electronic device 100 may alternatively directly send the permission information of the caller 1 in the electronic device 100 to the electronic device 300 after initiating the access request to the electronic device 300. This is not limited to the operations shown in S602 and S603.

S603: The electronic device 100 records a case in which the electronic device 300 obtains the permission information of the caller 1.

Specifically, the electronic device 100 may store an identifier of the electronic device 300 and an identifier of the caller 1 in an association manner, to indicate that the electronic device 300 obtains the permission information of the caller 1.

In S603, the case in which the electronic device 300 obtains the permission information of the caller 1 and that is recorded by the electronic device 100 may be referred to as first information.

It may be understood that after obtaining the permission information of the caller 1 from the electronic device 100, the electronic device 300 may determine, based on the permission information when performing S104 in FIG. 3C, whether to respond to the access request initiated by the electronic device 100 in S101.

If the device resource that the access request initiated by the electronic device 100 in S101 requires to be accessed is not in the permission information of the caller 1 in the electronic device 100, the electronic device 300 may refuse to respond to the access request. In this way, it can be ensured that a callee has consistent permission with a caller when serving the caller, a data security problem caused by permission expansion is avoided, and user privacy and data security are protected.

S604: The permission information of the caller 1 in the electronic device 100 changes.

There are a plurality of cases in which the permission information of the caller 1 in the electronic device 100 changes. For example, the cases may include: The user changes the permission information of the caller 1 in the electronic device 100, the permission information changes because of a status change of the caller 1 in the electronic device 100, and the permission information changes because of a time period change. This is not limited herein.

S605: The electronic device 100 sends changed permission information of the caller 1 in the electronic device 100 to the electronic device 300 recorded in S603.

Specifically, when the permission information of the caller 1 in the electronic device 100 changes, the electronic device 100 may update the changed permission information of the caller 1 to the device that has previously obtained the permission information of the caller 1, to maintain permission consistency.

S606: The electronic device 300 updates the permission information of the caller 1 in the electronic device 100.

In some embodiments, the permission synchronization method shown in FIG. 8A may be applied to any type of caller. In other words, regardless of whether a caller is a system application or a third-party application, a distributed system may perform the method shown in FIG. 8A. The system application is an application provided or developed by a manufacturer of an electronic device, and the third-party application is an application provided or developed by a manufacturer of a non-electronic device. The manufacturer of the electronic device may include a manufacturer, a supplier, a provider, an operator, or the like of the electronic device. The manufacturer may refer to a production manufacturer that manufactures the electronic device by using a self-made or purchased part and raw material. The supplier may refer to a manufacturer that provides a full kit, a raw material, or a part of the electronic device. The operator may refer to a manufacturer responsible for distribution of the electronic device.

In some embodiments, the permission synchronization method shown in FIG. 8A may be only for a third-party application. For a system application, permission synchronization is performed in an overall synchronization manner. In other words, in some embodiments, before performing the method shown in FIG. 8A, the distributed system needs to first determine that the caller 1 in the electronic device 100 is the third-party application.

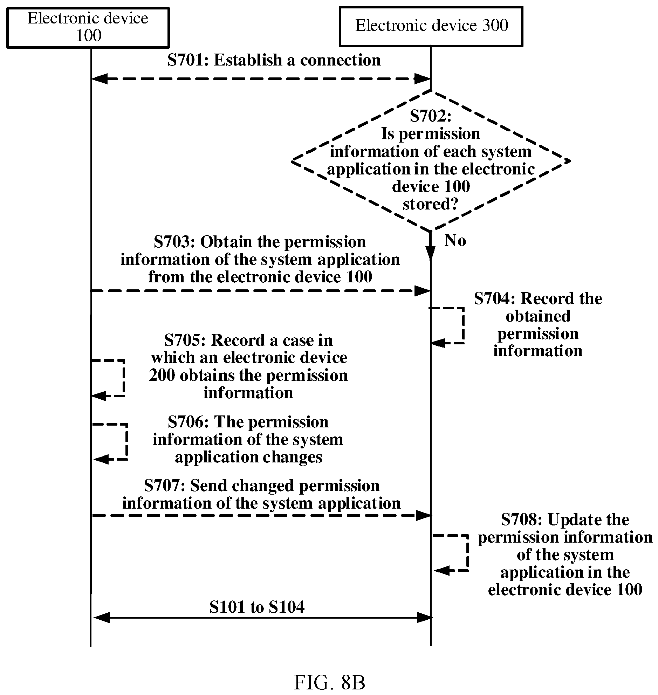

Refer to FIG. 8B. To reduce a burden of permission synchronization, in some embodiments, before S101, a procedure shown in FIG. 8B may be further performed. In a procedure shown in FIG. 8B, the caller 1 in the electronic device 100 is a system application. As shown in FIG. 8B, the procedure may include the following steps.

S701: A connection is established between the electronic device 100 and the electronic device 300 in the distributed system.

For a manner of establishing the connection between the electronic device 100 and the electronic device 300, refer to the related descriptions of the distributed system in FIG. 1.

S702: The electronic device 300 checks whether permission information of each system application in the electronic device 100 is stored.

Specifically, after the connection is established between the electronic device 300 and the electronic device 100, information about an application installed in a peer device may be synchronized, to learn of conventional applications and functional components that are installed in the peer device.

If a result of S702 is yes, S705 is performed; or if a result of S702 is no, S703 and S704 are performed.

S703: The electronic device 100 sends the permission information of the installed system application to the electronic device 300.

S704: The electronic device 300 records the obtained permission information of the system application in the electronic device 100.

S705: The electronic device 100 records a case in which the electronic device 300 obtains the permission information of the system application.

For S706 to S708, refer to S604 to S606.

In the process shown in FIG. 8A or FIG. 8B, the electronic device 100 and the electronic device 300 may call each other. For details, refer to the related descriptions in FIG. 3C.

When a caller calls a callee, the callee needs to explicitly obtain authorization of a user to ensure security of sensitive data. In a distributed system, when a subject device accesses a resource in an object device, the object device usually obtains the authorization from the user. However, when the object device does not meet an authorization condition, for example, there is no display for pop-up authorization, and the object device performs lock screen and the user is not nearby, the object device cannot obtain the authorization from the user. In addition, if the object device is executing another task, for example, the user is playing a game, requiring the authorization (for example, requiring the authorization in a pop-up form) from the user severely affects experience of users on subject and object sides.

To avoid the foregoing problems in a distributed scenario, in some embodiments, when the access control method shown in FIG. 3C is performed, and the subject device initiates the access request to the object device, if the object device does not have permission to initiate the access request, an authorization device is flexibly selected in the distributed system based on device attributes, and then the authorization device obtains, from the user, the permission of the subject device to initiate the access request to the object device. In this way, the authorization device can be flexibly selected, and authorization can be completed without interfering with the user.

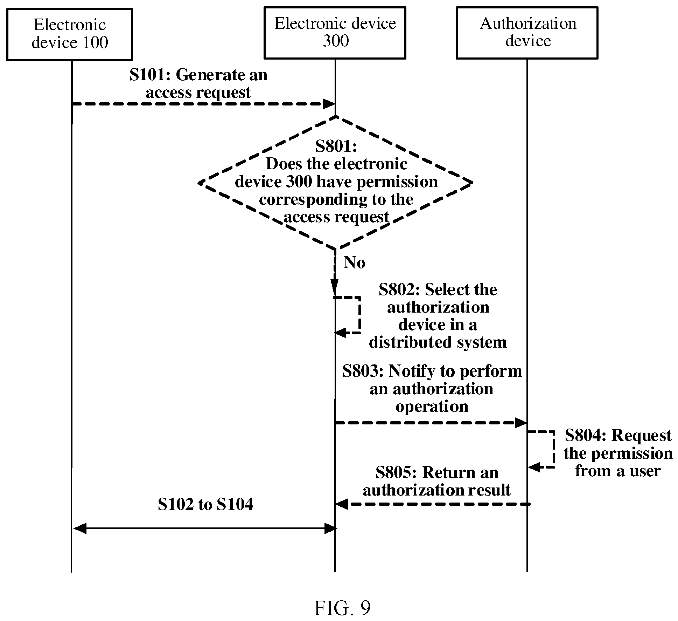

Refer to FIG. 9. In the access control method shown in FIG. 3C, after S101, a procedure shown in FIG. 9 may be further performed. As shown in FIG. 9, the procedure may include the following steps.

S801: The electronic device 300 checks whether the electronic device 300 has permission required by the access request, where the permission includes permission to call the first caller to access the first resource.

S802: If the electronic device 300 does not have the permission, the electronic device 300 selects an authorization device in the distributed system based on device attributes of devices when the electronic device 300 does not meet an authorization condition, a distance between the electronic device 300 and a user exceeds a first value, or the electronic device 300 is not suitable for authorization currently.

The devices in the distributed system may include other devices that are in the distributed system and that establish connections to the electronic device 300.

The device attribute may include but are not limited to one or more of the following:
(1) Whether an authorization condition is met. A device may require authorization from a user in the following several manners: pop-up authorization, fingerprint authorization, voice authorization, facial recognition authorization, and the like. Each authorization manner needs a corresponding condition. For example, the pop-up authorization requires that the device have a display, the fingerprint authorization requires that the device have a fingerprint recognition sensor, the voice authorization requires that the device have a microphone, and the facial recognition authorization requires that the device have a camera.
(2) Supported authorization manner. Refer to the related descriptions in (1).
(3) Current running status of the device. The running status may include, for example, whether the device is locked, whether a game is being run, or whether a video is being played.
(4) Distance between the device and the user.

In this embodiment of this application, the electronic device 300 may periodically obtain the attributes of the devices, may obtain the attributes of the devices when the permission needs to be obtained, or may obtain the attributes of the devices when joining the distributed system. In some other embodiments, if the attribute of the another device changes, the another device may further actively send an updated attribute to the electronic device 300.

There may be a plurality of policies for the electronic device 300 to select the authorization device based on the device attributes. This is not limited herein. For example, the electronic device 300 may select, as the authorization device, a device that meets the authorization condition, is closest to the user, and whose display is not occupied.

In some embodiments, the electronic device 300 may further synchronously select an authorization manner. A policy for the electronic device 100 to select an authorization manner is not limited herein.

S803: The electronic device 300 notifies the authorization device to perform an authorization operation.

In some embodiments, the electronic device 100 may further notify the authorization device of the determined authorization manner.

S804: The authorization device requires, from the user, the permission required by the caller 1 to initiate the access request.

In some embodiments, the authorization device may require authorization from the user in an authorization manner notified by the electronic device 300. In some other embodiments, if the electronic device 300 does not notify an authorization manner, the authorization device may select, according to a policy of the authorization device, an authorization manner to require authorization from the user.

S805: After the authorization succeeds, the authorization device sends a user authorization result to the electronic device 300.

After the electronic device 300 learns of the user authorization result, if the user permits the authorization, the electronic device 300 may perform S102 to S104 in S101 in FIG. 3C.

In the method shown in FIG. 9, the authorization device may be referred to as a fifth device.

In a standalone scenario, an object device finds a corresponding resource access policy from an "application identity-access policy" mapping repository based on an APP ID of a caller, and determines, according to the policy, whether to approve calling initiated by the caller this time.

In a distributed system, each caller can transparently use an ability, data, and a service that are provided by another device. For actual operation experience of an upper-layer application, such resource sharing is the same as that in a conventional standalone device. However, because different devices and callers from the different devices are involved in the distributed system, and the different devices have different security abilities, the resource access policy based on the APP ID cannot satisfy a resource access requirement in the distributed system, and a data security problem may be caused.

For example, security levels of a sound box and a watch are low. When a caller in a mobile phone calls a functional component in the watch, if private data in the mobile phone is transferred to the watch without considering the low security level of the watch, the data security problem occurs. For another example, if a fact that there is no secure environment in a watch is not considered, and a mobile phone calls the watch to perform bank payment behavior, severe data leakage may occur.

To make calling in the standalone scenario and a distributed scenario more secure, in some embodiments, when the access control method shown in FIG. 3C is performed, the electronic device 100 may further send identity information of the caller 1 to the electronic device 300.

In addition to the APP ID, identity information of the caller may further include one or more of the following: a PID and a UID of the caller, an account ID of a subject device, a system identifier (system ID) of the subject device in which the caller is located, and a device ID of the subject device.

For the PID, the UID, the account ID, and the device ID, refer to the foregoing related descriptions.

The system identifier (system ID) may be an identifier that is in a distributed system and that is allocated by the distributed system to an electronic device after the electronic device joins the distributed system.

In some embodiments, if the electronic device 100 has previously sent the identity information of the caller 1 to the electronic device 300, the electronic device 100 does not need to send complete identity information of the caller 1 to the electronic device 300 again, but only needs to send a dynamically changing part of the identity information to the electronic device 300. Specifically, the electronic device 100 may process dynamically changing information in the identity information of the caller 1 as a hash (hash) value. If the hash value changes, a changed hash value may be sent in S901.

When performing S104 in FIG. 3C, the electronic device 300 may first determine, based on the identity information of the caller 1 and an access control policy, whether the caller 1 in the electronic device 100 has permission to access the resource corresponding to the request. After determining that the caller 1 in the electronic device 100 has the permission, the electronic device 300 accesses the first resource in response to the access request received in S101.

Specifically, the access control policy may be formulated in the electronic device 300 in advance, where the access control policy describes a mapping relationship between resources in the electronic device 300 and identity information of APPs that have permission to access the resources. The access control policy is not specifically limited herein.

For example, the access control policy may include: 1. BLP (Bell-LaPadual) principle. To be specific, the caller cannot read data of a callee whose security level is higher than that of the caller, and the caller cannot write data of a callee whose security level is lower than that of the caller. 2. Biba principle. To be specific, the caller cannot read the data of the callee whose security level is lower than that of the caller, and the caller cannot write the data of the callee whose security level is higher than that of the caller.

In a distributed system, a device may access various resources in another device across devices. Because different devices have different security abilities, and the different devices may access different types of data, cross-device resource access has potential confidentiality and availability risks. For example, data leakage occurs when a mobile phone having a high security level sends data to a sound box having a low security level.

To avoid a data leakage risk caused by a device security level, in some embodiments, when the access control method shown in FIG. 3C is performed, a subject device may determine, based on a security level of an object device and/or a security level of the subject device, whether to initiate an access request, and the object device may determine, based on the security level of the object device and/or the security level of the subject device, whether to respond to the access request. In this way, the resource can be selectively opened based on the security levels of the different devices, and the data leakage risk is avoided.

In some embodiments, when the method shown in FIG. 3C is performed, after the connection is established between the electronic device 100 and the electronic device 300 in the distributed system, the electronic device 100 and the electronic device 300 may synchronize device security levels of each other.

A security level of a device mainly depends on a basic security ability provided by software and hardware of the device. A higher basic security ability of an electronic device indicates a higher security level of the device. Basic security elements that affect the basic security ability are, for example, device integrity protection, encryption and data security, security isolation, access permission control, and vulnerability anti-exploitation. For example, a device A runs a LiteOS lightweight OS, uses a low-end processor as hardware, and does not support complex virtual memory isolation or hardware-based security isolation. A device B runs an Android system, uses a high-end processor as hardware, and supports security abilities such as hardware-based security isolation and virtual memory isolation. In this case, a security level of the device B is higher than that of the device A. For another example, security levels of a mobile phone, a tablet, a smartwatch, and a large screen may usually decrease in sequence.

In some embodiments, when performing S101 in FIG. 3C, the electronic device 100 may first determine, based on the security level of the object device and/or the security level of the subject device, whether to initiate the access request. Herein, a policy for the object device and/or the subject device to determine, based on a security level of the electronic device 300, whether to initiate the access request is not specifically limited in this embodiment of this application. For example, when the resource requested by the access request is a sensitive resource, and the security level of the electronic device 300 is low, the electronic device 100 may refuse to initiate the access request, to prevent confidential data of the electronic device 100 from flowing to the electronic device 300.

In some embodiments, when performing S104 in FIG. 3C, the electronic device 300 may first determine, based on the security level of the object device and/or the security level of the subject device, whether to respond to the access request. Herein, a policy for the electronic device 300 to determine, based on the security level of the object device and/or the security level of the subject device, whether to respond to the access request is not specifically limited in this embodiment of this application. For example, when the resource requested by the access request is a sensitive resource, and a security level of the electronic device 300 is low, the electronic device 300 may refuse to respond to the access request, to avoid data leakage.

According to the foregoing optional embodiments, the corresponding resource may be selectively opened to another device in the distributed system based on the security levels of the different devices, to ensure confidentiality and integrity of a sensitive resource in each device.

In addition, in a case of dual authentication of the subject device and the object device, confidentiality and integrity of a device resource can be ensured, and an attack surface can be reduced.

In a distributed system, a device may access various resources in another device across devices. Different applications have different security requirements. For example, a bank APP requires the device to have a trusted execution environment (trusted execution environment, TEE), and a music APP requires the device to have only a basic isolation and access ability. However, when the music APP accesses data or a resource of the bank APP, there are potential risks of confidentiality and availability.

To avoid a data leakage risk caused by an application security level, in some embodiments, when the access control method shown in FIG. 3C is performed, a subject device may determine, based on a security level of a caller, whether to initiate an access request, and an object device may determine, based on the security level of the caller, whether to respond to the access request. In this way, a resource can be selectively opened based on security levels of the different applications, and the data leakage risk is avoided.

In some embodiments, when the method shown in FIG. 3C is performed, after the connection is established between the electronic device 100 and the electronic device 300 in the distributed system, the electronic device 100 and the electronic device 300 may synchronize security levels of applications of each other.

In this embodiment of this application, a security level of an application (including an APP and a functional component) may be preset.

In some embodiments, an electronic device may formulate a security level for each application according to a default fractionation and classification rule. For example, security levels may be differentiated based on application categories. For example, a security level of a system application is higher than that of a third-party application, and a security level of a shopping application is higher than that of a reading application.

In some embodiments, a security level of each application may alternatively be manually set by a user. For example, the user may customize the security level of the application based on a requirement of the user.

In some embodiments, when performing S101 in FIG. 3C, the electronic device 100 may first determine, based on a security level of the caller 1 and/or a security level of the callee 1, whether to initiate the access request. Herein, a policy for the electronic device 100 to determine, based on the security level of the caller 1 and/or the security level of the callee 1, whether to initiate the access request is not specifically limited in this embodiment of this application. For example, when the resource requested by the access request is a sensitive resource, and the security level of the callee 1 is low, the electronic device 100 may refuse to initiate the access request, to prevent confidential data of the caller 1 from flowing to the callee 1.

In some embodiments, when performing S104 in FIG. 3C, the electronic device 300 may first determine, based on a security level of the caller 1 and/or a security level of the callee 1, whether to respond to the access request. Herein, a policy for the electronic device 300 to determine, based on the security level of the caller 1 and/or the security level of the callee 1, whether to respond to the access request is not specifically limited in this embodiment of this application. For example, when the resource requested by the access request is a sensitive resource, and the security level of the callee 1 is low, the electronic device 300 may refuse to respond to the access request, to prevent confidential data of the caller 1 from flowing to the callee 1.

According to the foregoing optional embodiments, the corresponding resource may be selectively opened to another application in the distributed system based on the security levels of the different applications, to ensure confidentiality and integrity of a sensitive resource in each device.

In addition, in a case of dual authentication of the subject device and the object device, confidentiality and integrity of a device resource can be ensured, and an attack surface can be reduced.

In a distributed system, a device may access various resources in another device across devices. Different devices have different security sensitivity, and therefore have different security protection requirements. For example, if security sensitivity of a smart lock and a camera in a bedroom is higher than that of a low-security-sensitivity device such as a smart desk lamp, the smart desk lamp or an application thereof cannot control the camera in the bedroom or the smart lock, but the smart speaker may control the smart desk lamp. If security sensitivity of each device is not considered, a data security problem of cross-device access may be caused.

To avoid a data leakage risk caused by device security sensitivity, in some embodiments, when the access control method shown in FIG. 3C is performed, a subject device may determine, based on security sensitivity of an object device and/or security sensitivity of the subject device, whether to initiate an access request, and the object device may determine, based on the security sensitivity of the object device and/or the security sensitivity of the subject device, whether to respond to the access request. In this way, a resource can be selectively opened based on the security sensitivity of the different devices, and the data leakage risk is avoided.

In some embodiments, when the method shown in FIG. 3C is performed, after the connection is established between the electronic device 100 and the electronic device 300 in the distributed system, the electronic device 100 and the electronic device 300 may synchronize device security levels of each other.

Security sensitivity of each device refers to a degree of a privacy risk brought to a user after data in the device is leaked. A higher data privacy degree in the device indicates a higher risk degree that is after the device is pwned or data in the device is leaked and higher security sensitivity. For example, a device A is a desk lamp in a living room, and a consequence caused by pwning the device A is "the table lamp is randomly turned on or turned off". A device B is a camera in a bedroom, and a consequence caused by pwning the device B or leaking data is "a video cassette recording of the bedroom is leaked". In comparison, security sensitivity of the device B is higher for the user clearly.

In conclusion, a comparison with the foregoing device security level is made. The device security level depends on the security ability of the software and the hardware of the device, and the device security sensitivity depends on a degree of a privacy threat brought to the user because the device is destroyed.

The security sensitivity of each device may be preset.

In some embodiments, the device may formulate security sensitivity for the device according to a default fractionation and classification rule. For example, the security sensitivity of the device may be preset according to one or more of the following: a location (for example, a kitchen, a bedroom, or an outdoor light) of the device, whether the device is carried by the user, a device type, a type of data stored in the device, and the like. For example, when the user wears a watch, security sensitivity of the watch is high. However, when it is detected that the watch is detached from the user, a security sensitivity level of the watch decreases. For another example, security sensitivity of a camera in a bedroom is higher than security sensitivity of a smart desk lamp in a kitchen.

In some other embodiments, the security sensitivity of the device may alternatively be manually set by the user. For example, the user may customize the security sensitivity of the device based on a requirement of the user.

In some embodiments, when performing S101 in FIG. 3C, the electronic device 100 may first determine, based on the security sensitivity of the object device and/or the security sensitivity of the subject device, whether to initiate the access request. Herein, a policy for the object device and/or the subject device to determine, based on security sensitivity of the electronic device 300, whether to initiate the access request is not specifically limited in this embodiment of this application. For example, when the resource requested by the access request is a sensitive resource, and the security sensitivity of the electronic device 300 is low, the electronic device 100 may refuse to initiate the access request, to prevent confidential data of the electronic device 100 from flowing to the electronic device 300.

In some embodiments, when performing S104 in FIG. 3C, the electronic device 300 may first determine, based on the security sensitivity of the object device and/or the security sensitivity of the subject device, whether to respond to the access request. Herein, a policy for the electronic device 300 to determine, based on the security sensitivity of the object device and/or the security sensitivity of the subject device, whether to respond to the access request is not specifically limited in this embodiment of this application. For example, when the resource requested by the access request is a sensitive resource, and security sensitivity of the electronic device 300 is low, the electronic device 300 may refuse to respond to the access request, to avoid data leakage.

According to the foregoing optional embodiments, the corresponding resource may be selectively opened to another device in the distributed system based on the security sensitivity of the different devices, to ensure confidentiality and integrity of a sensitive resource in each device.

In addition, in a case of dual authentication of the subject device and the object device, confidentiality and integrity of a device resource can be ensured, and an attack surface can be reduced.

The following describes software structures of the electronic device 100 and the electronic device 300 that are provided in embodiments of this application and that are configured to perform the access control method in FIG. 3C and the solutions in the foregoing optional embodiments.

Software systems of the electronic device 100 and the electronic device 300 each may use a layered architecture, an event-driven architecture, a microkernel architecture, a micro service architecture, a cloud architecture, or the like. For example, the software systems of the electronic device 100 and the electronic device 300 include but are not limited to Harmony^{®}, iOS^{®}, Android^{®}, Windows^{®}, Linux, or another operating system.

In the layered architecture, software is divided into several layers, and each layer has a clear role and task. The layers communicate with each other through a software interface. In some embodiments, from top to bottom, an application layer, an application framework layer, a system service layer, a kernel layer, and the like may be included.

The application layer may include a series of application packages, where the application packages include APPs such as a camera, a gallery, a calendar, a call, and a map, and may further include functional components such as an FA and a PA.

The application framework layer provides an application programming interface (application programming interface, API) and a programming framework for an application at the application layer. The application framework layer includes some predefined functions.

The application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and so on.

The content provider is configured to: store and obtain data, and enable the data to be accessed by an application. The data may include a video, an image, audio, calls that are made and answered, a browsing history and a bookmark, an address book, and the like.

The view system includes visual controls such as a text display control and an image display control. The view system may be configured to construct the application. A display interface may include one or more views. For example, a display interface including a short message service message notification icon may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for the application.

The notification manager enables the application to display notification information in the status bar, and may be configured to convey a notification-type message. The notification-type manager may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application that is run in a background, or may be a notification that appears on the screen in a form of a dialog window. For example, text information is displayed in the status bar, an announcement is given, the electronic device vibrates, or an indicator light blinks.

A kernel library includes two parts: a function that needs to be called in java language and a kernel library of Android.

The application layer and the application framework layer are run on a virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

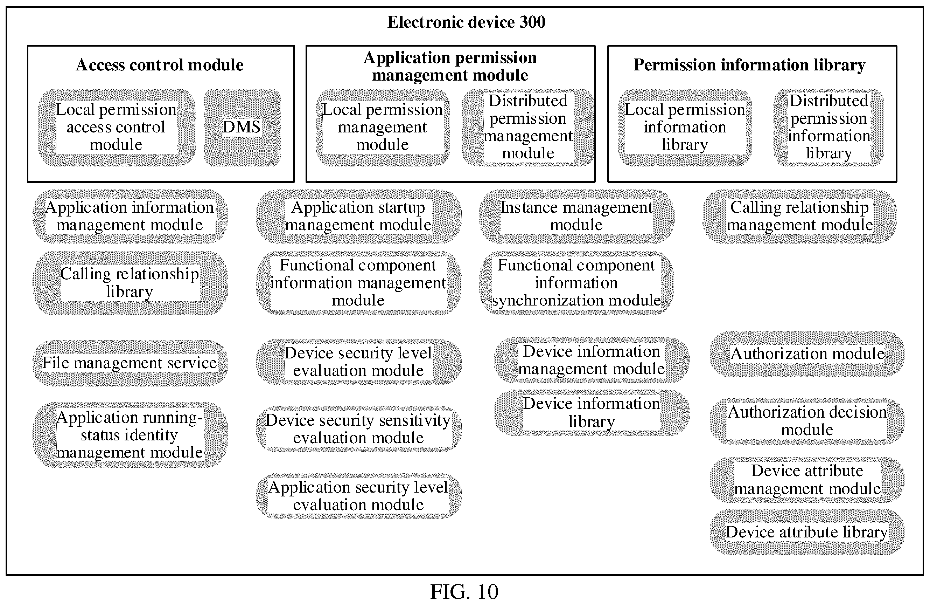

FIG. 10 shows an example of a software structure of the electronic device 100 configured to perform the access control method in FIG. 3C and the solutions in the foregoing optional embodiments.

As shown in FIG. 10, the electronic device 300 includes the following several modules: an application information management module, an application startup management module, an instance management module, a calling relationship management module, a calling relationship library, a functional component information management module, a functional component information synchronization module, an access control module, an application permission management module, and a permission information library.

The application information management module is configured to manage information about each APP and functional component that are installed in the electronic device 300, for example, manage PIDs of the APP and the functional component.

The application startup management module is configured to manage startup of the APP and the functional component. For example, when the electronic device 300 receives a request of another device for calling an application, the application startup management module may start up the application.

The functional component information management module is configured to maintain functional component information synchronized from this device and the another device and including a name and a type that are of a functional component, a device in which the functional component is located, and the like.

The functional component information synchronization module is configured to synchronize the functional component information of this device to the another device, and receive the functional component information synchronized from the another device.

The instance management module is responsible for dynamically enabling an instance of a callee based on information about a caller to serve the caller. For a specific policy for the instance management module to enable the instance of the callee, refer to the detailed descriptions in S102 to S104 in FIG. 3C. The instance management module is further configured to manage a life cycle of each enabled instance, for example, stop, destroy, or restart up the instance.

The calling relationship management module is responsible for maintaining a calling relationship between the caller and the instance that is of the callee and that serves the caller, and storing the calling relationship in the calling relationship library.

The calling relationship library is configured to store the calling relationships between the caller and the instance of the callee. The calling relationship includes instance information of the callee and information about each caller that calls the instance. For instance information of the caller and the information about the caller, refer to the related descriptions in S102 in FIG. 3C. Details are not described herein.

In some embodiments, the calling relationship library may be further configured to store a correspondence between a sandbox of a callee and an instance that is run in the sandbox.

In some other embodiments, information in the calling relationship library may not only be stored in an object device (namely, the electronic device 300), but also may be stored in a subject device (for example, the electronic device 100) in which the caller is located.

Table 1 below shows an example of related information that is of a callee in the electronic device 300 and a caller of the callee and that is stored in the calling relationship library.

**Table 1**

| Calling relationship ID | Instance information of a callee | | | | | Information about a caller | | | |
|---|---|---|---|---|---|---|---|---|---|
| | Device ID | APP ID | Identifier of a sandbox | UID of an instance | PID of the instance | APP ID | UID | Device ID | Developer signature |
| 1 | Electronic device 300 | ID 4 | Sandbox 1 | UID 30000 | PID 1 | ID 1 | UID 10000 | Electronic device 100 | HUAWEI 1 |
| 2 | | | Sandbox | UID | PID 2 | ID | UID | Electronic | HUAWEI |
| | | | 2 | 30001 | | 2 | 10001 | device 200 | 2 |
| 3 | | | | | | ID 3 | UID 10002 | Electronic device 400 | HUAWEI 2 |

It can be learned from Table 1 that a conventional application or a functional component whose identifier is the "ID 4" in the electronic device 300 is called by three callers. The electronic device 300 creates two instances. One instance serves a caller in the electronic device 100, and the other instance serves two callers developed by a same developer in the electronic device 200 and the electronic device 400.

In addition, the electronic device 300 creates two sandboxes. The sandbox 1 is for running an instance that is of a callee 1 and that serves a caller 1, and storing application data from the caller 1. The sandbox 2 is for running an instance that is of the callee 1 and that serves a caller 2 and a caller 3, and storing application data from the caller 2 and the caller 3.

The access control module is configured to manage an access request received by the electronic device 300, and determine whether to respond to the received access request. During specific implementation, the access control module may determine, depending on whether the caller 1 in the electronic device 100 has permission to call the caller 1, whether the caller 1 in the electronic device 100 has permission to access a first resource, device security levels of the electronic device 100 and the electronic device 300, security levels of the caller 1 and the callee 1, and the like, whether to initiate the access request.

The access control module may include a local access control module and a DMS. The DMS is configured to: when the callee in the electronic device 300 receives an access request of a caller in another device, be responsible for calling of the callee based on permission information of the corresponding caller. The local access control module is configured to: when the caller in the electronic device 300 calls the callee, be responsible for calling of the callee based on permission information of the corresponding caller.

The application permission management module is configured to manage permission information of a local application (including an APP and a functional component). The application permission management module may include a local permission management module configured to manage the permission information of the local application, and further includes a distributed permission management module configured to manage permission information of an application in another device in a distributed system. The local permission management module is further configured to listen to a change of the permission information of the local application. Local permission of an application may be determined by a user or updated by the application in a discretionary manner. For example, the user enables/disables permission of a camera, a microphone, album access, and the like, and the application updates and enables the permission.

The permission information library is configured to store and maintain permission information of an application. The permission information library may include a local permission information library for maintaining the permission information of the local application and a distributed permission information library for maintaining the permission information of the application in the another device in the distributed system.

In some embodiments, the electronic device 300 may further include the following module: a file management service, responsible for managing storage of application data, and specifically configured to dynamically create a sandbox of the callee based on the information about the caller, and provide a storage service of the application data for the caller. For a specific policy for the file management service to create the sandbox of the callee, refer to the detailed descriptions of S201 and S202 in FIG. 4C. The file management service is further configured to manage a life cycle of each sandbox of the callee, for example, create and delete the sandbox.

In some embodiments, the electronic device 300 may further include the following module: an application running-status identity management module, configured to manage a running-status identity of each application in the electronic device 300.

In some embodiments, the electronic device 300 may further include the following modules: a device security level evaluation module, configured to evaluate a device security level of the electronic device 300; an application security level evaluation module, configured to evaluate a security level of the application (including an APP and a functional component) in the electronic device 300; and a device security sensitivity evaluation module, configured to evaluate security sensitivity of the electronic device 300.

In some embodiments, the electronic device 300 may further include the following modules: a device information management module, configured to synchronize device information of the another device in the distributed system, for example, a security level and security sensitivity that are of the device, and a security level of each application in the device; and a device information library, configured to store the device information of the another device in the distributed system.

In some embodiments, the electronic device 300 may further include the following modules:
an authorization module, configured to determine whether the electronic device 300 meets an authorization condition, whether the electronic device 300 is suitable for authorization currently, or whether the object device can obtain authorization from the user in time, where
if the electronic device 300 does not meet the authorization condition, the electronic device 300 is currently executing a first task, or the electronic device 300 cannot obtain the authorization from the user in time, the authorization module may select an authorization device by using an authorization decision module, send an authorization request to the authorization device, and receive an authorization result returned by the authorization device; and when the authorization result indicates that the user allows grant permission required by the access request, the authorization module obtains the permission required by the access request; or
if the electronic device 300 meets the authorization condition, the electronic device 300 is suitable for authorization currently, and the electronic device 300 can currently obtain the authorization from the user in time, the authorization module may call software and hardware resources of the electronic device 300, and provide an authorization manner, to obtain permission that is required by the access request and that is granted by the user;
the authorization decision module, configured to select an electronic device in the distributed system as the authorization device based on a type of the electronic device 300 and an attribute of another electronic device in the distributed system, where in some embodiments, the authorization decision module may be further configured to determine an authorization manner used by the authorization device;
a device attribute management module, configured to synchronize a device attribute of the electronic device 300 to the another device in the distributed system, and further configured to synchronize the device attribute of the another device to the electronic device 300; and
a device attribute library, configured to store and maintain a device attribute of each device in the distributed system.

It may be understood that the foregoing modules in the electronic device 300 may be located at an application layer, an application framework layer, a system service layer, a kernel layer, or the like in the electronic device 300. This is not limited herein.

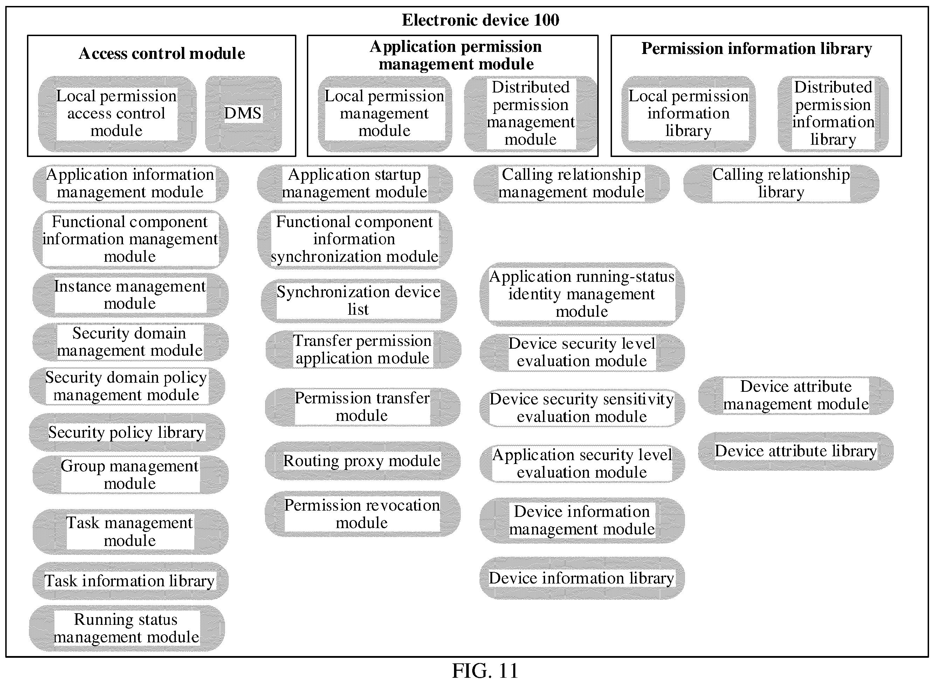

FIG. 11 shows an example of a software structure of the electronic device 100 configured to perform the access control method in FIG. 3C and the solutions in the foregoing optional embodiments.

As shown in FIG. 11, the electronic device 100 includes the following several modules: an application information management module, an application startup management module, a functional component information management module, a functional component information synchronization module, a calling relationship management module, a call relationship library, an application permission management module, and a permission information library.

For all of the application information management module, the application startup management module, the functional component information management module, the functional component information synchronization module, the application permission management module, and the permission information library, refer to the foregoing related descriptions about the electronic device 300.

The calling relationship management module is responsible for maintaining a calling relationship between a caller and an instance that is of a callee and that serves the caller, and storing the calling relationship in the calling relationship library.

The calling relationship library is configured to store the calling relationships between the caller and the instance of the callee. The calling relationship includes instance information of the callee and information about each caller that calls the instance. For instance information of the caller and the information about the caller, refer to the related descriptions in S102 in FIG. 3C. Details are not described herein.

Table 2 below shows an example of related information that is of a caller in the electronic device 100 and a callee of the caller and that is stored in the calling relationship library.

**Table 2**

| Calling relationship ID | Information about a caller | | | | Instance information of a callee | |
|---|---|---|---|---|---|---|
| | APP ID | UID | Device ID | Developer signature | Device ID | APP ID |
| 1 | ID 1 | UID 10000 | Electronic device 100 | HUAWEI 1 | Electronic device 300 | ID 4 |

Through comparison with Table 1, it can be learned that for a same calling relationship, the electronic device 300 and the electronic device 100 may share a same calling relationship ID, and the calling relationship ID may be allocated by a subject device (namely, the electronic device 100).

In some embodiments, the calling relationship management module includes a calling relationship mapping module. The module serves as a virtual agent, internally shields actual information of the callee, for example, a device in which the callee is located, and externally finds, based on a requirement, a correct device to call the callee. The caller in the electronic device 100 does not know the actual information of the callee, can learn of the actual information of the callee only by using the calling relationship mapping module, and initiates calling.

An access control module is configured to manage an access request initiated by the electronic device 100, and determine whether to initiate the access request. During specific implementation, the access control module may determine, depending on whether a caller 1 in the electronic device 100 has permission to call the caller 1, whether the caller 1 in the electronic device 100 has permission to access a first resource, device security levels of the electronic device 100 and the electronic device 300, security levels of the caller 1 and the callee 1, and the like, whether to initiate the access request.

In some embodiments, the electronic device 100 may further include the following several modules: an instance management module, a security domain management module, a security domain policy management module, a security policy library, and a group management module.

The instance management module is configured to create an instance of a caller when the caller is started up, and further configured to create, when the caller calls an FA, a new instance to run UI code of the FA. The instance management module is further configured to manage a life cycle of a UI instance of the FA, for example, start up, stop, destroy, or restart up the UI instance.

The security domain management module is configured to allocate security context information to each instance, so that a kernel creates a corresponding kernel security domain. After the UI instance of the FA is created, the module dynamically determines, based on a default mechanism, whether a new security domain needs to be additionally created.

The security domain policy management module is configured to provide a security policy of a security domain, so that a security domain at a kernel layer loads and enables the security policy.

The security policy library is configured to store a security policy of each security domain. For example, the security policy may include allowing the UI instance of the FA to communicate with a logic code instance of the FA, refusing the UI instance of the FA to communicate with a caller process integrating the UI code, or the like.

The group management module is configured to add, modify, or delete instance group information for the UI instance of the FA. Corresponding group ID information is assigned to the UI instance of the FA when the UI instance of the FA is created. When permission of the caller changes dynamically, the group ID information of the UI instance of the FA is also updated synchronously.

The foregoing access control module is configured to control access of the UI instance of the FA to a sensitive resource of a system. Specifically, the module performs instance-level permission management and control based on information about permission that is granted by the caller to the UI instance of the FA.

In some embodiments, the electronic device 100 may further include the following modules:

Task management module: The Task management module is responsible for managing a task in a task subsystem of the caller and externally providing a task status corresponding to the caller. The task management module is further configured to restore the task when the task in the task subsystem is abnormal. For specific implementation of task restoration, refer to the descriptions in the foregoing method embodiments;

Task information library: The task information library is configured to store task information associated with the caller, where the task information includes information such as a task subsystem ID, a calling relationship ID, a task status, an APP ID of the caller, and an APP ID of the callee.

Table 3 below shows an example of a piece of task subsystem information that is of the electronic device 100 and that is stored in the task information.

**Table 3**

| Task subsystem ID | Calling relationship ID | Task status | APP ID of a caller | APP ID of a callee |
|---|---|---|---|---|
| 1 | 1 | Normal | ID 1 | ID 4 |

Running status management module: The running status management module is configured to manage running status information of the caller and the callee, and synchronously change a running status of an instance of the callee based on the running status of the caller.

In some embodiments, the electronic device 100 may further include the following several modules:
a transfer permission application module, configured to apply to a user for permission required by the access request initiated by the caller 1 to the callee 1 in the electronic device 300;
a permission transfer module, configured to transfer, to the callee 1 in the electronic device 300, the permission obtained by the caller 1 through application by using the transfer permission application module;
a routing proxy module, configured to dynamically create a route of a specified service and revoke a proxy object based on the access request initiated by the electronic device 100, for example, create a path from the caller 1 in the electronic device 100 to the callee 1 in the electronic device 300; and
a permission revocation module, responsible for revoking permission transferred by the caller in the electronic device 100 to another electronic device (for example, the callee 1 in the electronic device 300).

In some embodiments, the electronic device 100 may further include a synchronization device list, configured to record or store a case in which another device obtains permission information of an application in the electronic device 100. For example, synchronization device list may record that the electronic device 300 obtains permission information of the caller 1.

In some embodiments, the electronic device 100 may further include an application running-status identity management module, configured to manage a running-status identity of each application in the electronic device 100.

In some embodiments, the electronic device 100 may further include the following several modules: a device security level evaluation module, an application security level evaluation module, and a device security sensitivity evaluation module. The device security level evaluation module is configured to evaluate a device security level of the electronic device 100. The application security level evaluation module is configured to evaluate a security level of the application (including an APP and a functional component) in the electronic device 100. The device security sensitivity evaluation module is configured to evaluate device security sensitivity of the electronic device 100.

In some embodiments, the electronic device 100 may further include the following several modules: a device information management module and a device information library. The device information management module is configured to synchronize device information of another device in a distributed system, for example, a security level and security sensitivity that are of the device, and a security level of each application in the device. The device information library is configured to store the device information of the another device in the distributed system.

In some embodiments, the electronic device 100 may further include the following several modules:
a device attribute management module, configured to synchronize a device attribute of the electronic device 100 to the another device in the distributed system, and further configured to synchronize a device attribute of the another device to the electronic device 100; and
a device attribute library, configured to store and maintain a device attribute of each device in the distributed system.

It may be understood that the foregoing modules in the electronic device 100 may be located at an application layer, an application framework layer, a system service layer, a kernel layer, or the like in the electronic device 100. This is not limited herein.

It may be understood that FIG. 10 and FIG. 11 are merely examples. The software structures of the electronic device 100 and the electronic device 300 provided in embodiments of this application may alternatively be in another form, or may include more or fewer modules. This is not limited herein.

In a conventional standalone scenario, a system application, a third-party application, and the like may access various resources in a system after permission check performed by an access control module succeeds. When a plurality of callers access a resource simultaneously, a resource scheduling management module in the system performs scheduling management based on a status of a caller in this device and a type of the resource, to appropriately use the resource and satisfy a user requirement. For example, when two callers simultaneously request to access a camera, because the camera is an exclusive resource and cannot provide a sharing service for the two callers simultaneously, it is determined in the standalone scenario that one caller accesses the camera preferentially.

In a distributed system, cross-device resource calling is a quite common scenario. When the caller in this device and a cross-device caller access a resource simultaneously, how to appropriately perform resource scheduling to satisfy a user requirement is an urgent problem to be resolved.

An example not encompassed by the claims but useful for understanding this application provides a cross-device access control method. The method is applied to the distributed system 10 shown in FIG. 1 and the distributed scenarios shown in FIG. 2. In the method, when a plurality of callers access a resource in an object device, the object device determines a priority of each caller based on running statuses of the plurality of callers and user information of a subject device and the object device, and preferentially responds to a resource access request having a high priority. In this way, a resource can be appropriately scheduled to satisfy an access requirement of a user. In addition, when a shared resource is insufficient, a true low-priority instance is preferentially released to ensure normal running of a caller that is being executed.

Herein, a type of the resource that is in the object device and that is accessed by the caller is not limited in this embodiment of this application. The resource that is in the object device and that is accessed by the caller may be an exclusive resource, for example, a camera or an audio device, or may be a shared resource, for example, a stored file or stored data, or a memory resource.

The running status of the caller may include foreground running, background running, and the like.

The user information of the subject device or the object device includes a user that currently logs in to the device, and the like.

There may be a plurality of policies for the object device to determine the priority of each caller. This is not limited herein. For example, the policy of the priority may include: A priority of a caller in a device in which an accessed resource is located is higher than a priority of a caller in another device, a priority of a foreground caller is higher than a priority of a background caller, a priority of a caller in a device of a same user as the device in which the accessed resource is located is higher than the priority of the caller in the another device, and so on.

The policy of the priority may be prestored in the object device, or may be set or changed by the user in a discretionary manner. This is not limited herein.

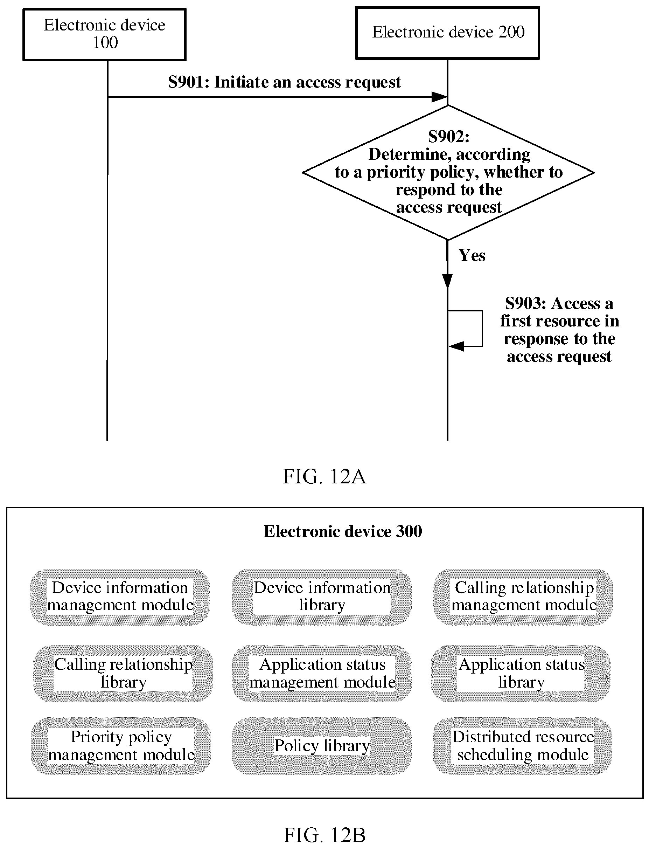

FIG. 12A is an example of a flowchart of a cross-device access control method according to an example not encompassed by the claims but useful for understanding this application.

As shown in FIG. 12A, the method may include the following steps.

S901: An electronic device 100 initiates an access request to an electronic device 300, where the access request is used by a caller 1 to call a callee 1 and access a first resource in the electronic device 300 by using the callee 1.

For S901, refer to S101 in FIG. 3C.

S902: The electronic device 300 determines, according to a priority policy, whether to respond to the access request.

For the priority policy, refer to the foregoing descriptions.

For example, after receiving the access request, the electronic device 300 may determine a priority of the caller 1 and a priority of a caller that is currently accessing the resource corresponding to the access request in the electronic device 300. The caller that is currently accessing the resource corresponding to the access request in the electronic device 300 may be a caller in another electronic device, or may be a caller in the electronic device 300.

When the resource corresponding to the access request is an exclusive resource, the electronic device 300 may choose to serve a highest-priority caller, and temporarily refuse to serve another caller, to ensure that the highest-priority caller can preferentially use the resource.

When the resource corresponding to the access request is a shared resource, the electronic device 300 may perform priority sorting for the caller 1 and a plurality of callers that are currently accessing the resource, and first serve a high-priority caller and stop serving a low-priority caller in a maximum service that can be provided by the shared resource.

S903: The electronic device 300 runs an instance of the callee 1, and accesses the first resource in response to the access request received in S101.

For specific implementation of S903, refer to the descriptions of S104 in FIG. 3C.

In the method shown in FIG. 12A, when a plurality of electronic devices call a same callee in a same electronic device, an electronic device (for example, the electronic device 100) in the plurality of electronic devices may be referred to as a first device, a caller in the first device may be referred to as a first caller, another electronic device (for example, an electronic device 200) in the plurality of electronic devices may be referred to as a second device, and a caller in the second device may be referred to as a second caller. An accessed electronic device (for example, the electronic device 300) may be referred to as a third device, and an accessed resource in the third device may be referred to as the first resource. The access request sent by the first device to the third device may be referred to as a first access request, and an access request sent by the second device to the third device may be referred to as a second access request.

FIG. 12B shows an example of a software structure of an electronic device 300 configured to perform a cross-device access control method according to an example not encompassed by the claims but useful for understanding this application.

The software system of the electronic device 300 may use a layered architecture, an event-driven architecture, a microkernel architecture, a micro service architecture, a cloud architecture, or the like. For example, the software system of the electronic device 300 includes but is not limited to Harmony^{®}, iOS^{®}, Android^{®}, Windows^{®}, Linux, or another operating system.

In the layered architecture, software is divided into several layers, and each layer has a clear role and task. The layers communicate with each other through a software interface. In some embodiments, from top to bottom, an application layer, an application framework layer, a system service layer, a kernel layer, and the like may be included.

As shown in FIG. 12B, the electronic device 300 may include a device information management module, a device information library, an application status management module, an application status library, a calling relationship management module, a calling relationship library, a priority policy management module, a policy library, and a distributed resource scheduling module.

The device information management module is configured to synchronize user information of another device in a distributed system, and further configured to synchronize user information of this device to the another device in the distributed system.

The device information library is configured to store user information of the another device in the distributed system.

The application status management module is configured to synchronize status information of each application in the another device in the distributed system, and further configured to synchronize status information of each application in this device to the another device in the distributed system.

The application status library is configured to store the status information of each application in the another device in the distributed system.

For the calling relationship management module and the calling relationship library, refer to the related descriptions in FIG. 10.

The priority policy management module is configured to manage a priority policy formulated for each caller in the electronic device 300. For details of the priority policy, refer to the foregoing related descriptions.

The policy library is configured to store the priority policy in the electronic device 300.

The distributed resource scheduling module is configured to determine, based on application status information, user information of a device, and the like and according to the priority policy, a priority of a caller 1 and a priority of a caller that is currently accessing a resource corresponding to an access request in the electronic device 300, and determine how to schedule the resource.

It may be understood that the foregoing modules in the electronic device 300 may be located at the application layer, the application framework layer, the system service layer, the kernel layer, or the like in the electronic device 300. This is not limited herein.

It may be understood that FIG. 12B is merely an example. The software structure of the electronic device 300 provided in this embodiment of this application may alternatively be in another form, or may include more or fewer modules. This is not limited herein.

In a distributed system, a logical "super device" includes various smart devices running on different OS platforms. From a perspective of an application in a device, the application may transparently use a resource provided by another device, and is unaware of a change of an underlying platform. For example, an instant messaging APP in a mobile phone may use a camera of a smart screen to make a video call. The distributed system shields cross-device underlying details from an application layer, and provides a video stream obtaining interface only for an upper-layer application. From a perspective of a user, a functional component installed in a device may seamlessly migrates to another device for running, to eliminate a procedure of installation and startup. For example, when the instant messaging APP in the mobile phone accesses the camera of the smart screen, permission check is performed. If the check fails, the user is prompted that "the application does not have permission to access the camera". If the check succeeds, the user is prompted that "the application is accessing the camera". Underlying operating systems of the devices that the "super device" includes are different, and access control mechanisms and abilities thereof are different. Therefore, how to adapt and coordinate access control policies across platforms to bring transparent, seamless, and new experience to the user is a new challenge.

An embodiment of this application provides a cross-platform access control method. The method is applied to the distributed system 10 shown in FIG. 1 and the distributed scenarios shown in FIG. 2. In a distributed system including a plurality of devices running heterogeneous OSs, when an application in a device accesses, across devices, a resource in another device running a heterogeneous OS, identity information, context information, and corresponding permission information of the application migrate to a peer device, to support seamless migration of the application to another device and transparent use of a resource provided by the another device, and satisfy an actual use requirement of a user with a "super device".

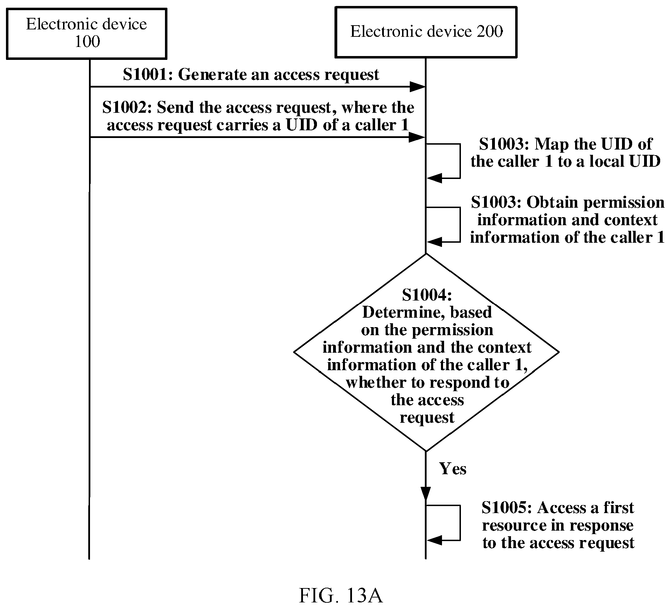

FIG. 13A is an example of a flowchart of a cross-platform access control method according to an example not encompassed by the claims but useful for understanding this application.

As shown in FIG. 13A, the method may include the following steps.

S1001: An electronic device 100 initiates an access request to an electronic device 300, where the access request is used by a caller 1 to call a callee 1 and access a first resource in the electronic device 300 by using the callee 1.

S1002: The electronic device 100 sends the access request and identity information, for example, a UID, of the caller 1 to the electronic device 300.

In some embodiments, after S1001, the electronic device 100 may further determine, based on permission granted by a user, whether there is permission to initiate the access request. When there is permission, the electronic device 100 performs S1002.

S1003: The electronic device 300 maps an identity of the caller 1 in the electronic device 100 to a local application identity, and obtains permission information and context information of the caller 1 based on the local application identity of the caller 1.

In some embodiments of this application, after a connection is established between the electronic device 100 and the electronic device 300, the electronic device 300 may synchronize information in the electronic device 100. The information may include one or more of the following information: identity information, for example, a UID, of each installed application, permission information obtained by the application, and context information, for example, foreground and background statuses, of the application.

In some other embodiments of this application, after receiving the access request, the electronic device 300 may check whether synchronized information in the electronic device 100 includes permission information required by the access request. If no, the electronic device 100 may be further triggered to obtain the permission. After obtaining the permission, the electronic device 100 may transfer the permission to the electronic device 300.

After the electronic device 300 synchronizes the information in the electronic device 100, the information is stored in a form that can be accessed by an OS of the electronic device 300. Because different OSs store information in different forms, a device running another OS cannot directly access the information.

That the electronic device 300 maps the identity of the caller 1 in the electronic device 100 to the local application identity is equivalent to an interpretation process. The access request in the electronic device 100 is interpreted as a form that can be understood by the OS of the electronic device 300, and then whether to respond to the access request is determined.

The electronic device 300 may obtain, from the stored information in the electronic device 100 based on the local identity information of the caller 1 in the electronic device 300, permission information and context information that correspond to the caller 1. Specifically, to differentiate an application installed in the electronic device 300 from an application that is of another device and that is mapped to the electronic device 300, the electronic device 300 may allocate, in a first interval (for example, 10000 to 19999), identity information to the application installed in the electronic device 300, and allocate, in a second interval (for example, 100000 to 199990), identity information to the application that is of the another device and that is mapped to the electronic device 300, to differentiate the application in this device from the application in the another device.

S1004: The electronic device 300 determines, based on the permission information and the context information of the caller 1, whether to respond to the access request.

Specifically, the electronic device 300 may perform permission check on the access request, and may respond to the access request if the permission check succeeds. The electronic device 300 may further determine, based on the context information of the caller 1, whether to respond to the access request.

S1005: When a determining result in S1004 is yes, the electronic device 300 responds to the access request.

In the method shown in FIG. 13A, the electronic device 100 may be referred to as a first device, the caller 1 may be referred to as a first caller, and the electronic device 300 may be referred to as a second device. An operating system of the electronic device 100 may be referred to as a first operating system, and the operating system of the electronic device 300 may be referred to as a second operating system.

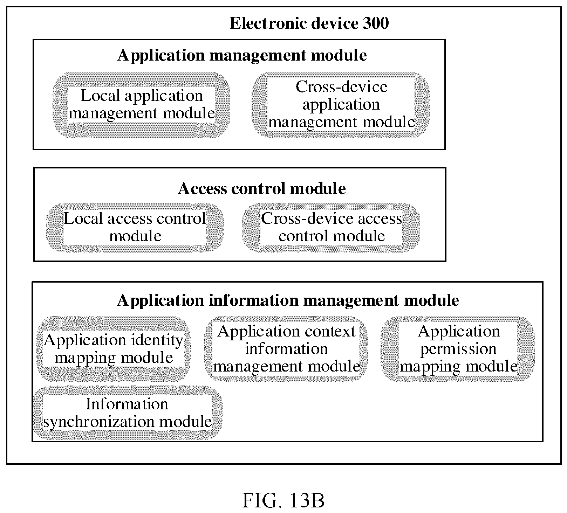

FIG. 13B shows an example of a software structure of an electronic device 300 configured to perform a cross-platform access control method according to an example not encompassed by the claims but useful for understanding this application.

The software system of the electronic device 300 may use a layered architecture, an event-driven architecture, a microkernel architecture, a micro service architecture, a cloud architecture, or the like. For example, the software system of the electronic device 300 includes but is not limited to Harmony^{®}, iOS^{®}, Android^{®}, Windows^{®}, Linux, or another operating system.

In the layered architecture, software is divided into several layers, and each layer has a clear role and task. The layers communicate with each other through a software interface. In some embodiments, the electronic device 300 may include an application layer and an application framework layer from top to bottom. This is not limited thereto. In some other embodiments, the software system of the electronic device 300 may further include a kernel layer, a system service layer, and the like.

As shown in FIG. 13B, the electronic device 300 may include an application management module, an access control module, and an application information management module.

The application management module includes a local application management module and a cross-device application management module. The local application management module is configured to manage an application of a local device, and select, when an application that initiates access control is a local application, a local access control module to perform access control. The cross-device application management module is configured to manage an application mapped from a subject device, and select, when an application that initiates access control is an application mapped from another device, a cross-device access control module to perform access control.

The access control module includes the local access control module and the cross-device access control module. The local access control module is configured to authenticate an access request initiated by the local device. The cross-device access control module is configured to authenticate an access request initiated by the another device.

The application information management module includes an application identity mapping module, an application context information management module, an application permission mapping management module, and an information synchronization module.

The application identity mapping module is configured to map an application identity in the another device to a local application identity.

The application context information management module is configured to manage context information of each application (including the local application and the application obtained through mapping).

The application permission mapping management module is configured to map permission of an application in the another device to local permission.

The information synchronization module is configured to synchronize application information, for example, the application identity, context information, and synchronization information, in the another device to the electronic device 300.

It may be understood that the foregoing modules in the electronic device 300 may be located at the application layer, the application framework layer, the system service layer, the kernel layer, or the like in the electronic device 300. This is not limited herein.

It may be understood that FIG. 13B is merely an example. The software structure of the electronic device 300 provided in this embodiment of this application may alternatively be in another form, or may include more or fewer modules. This is not limited herein.

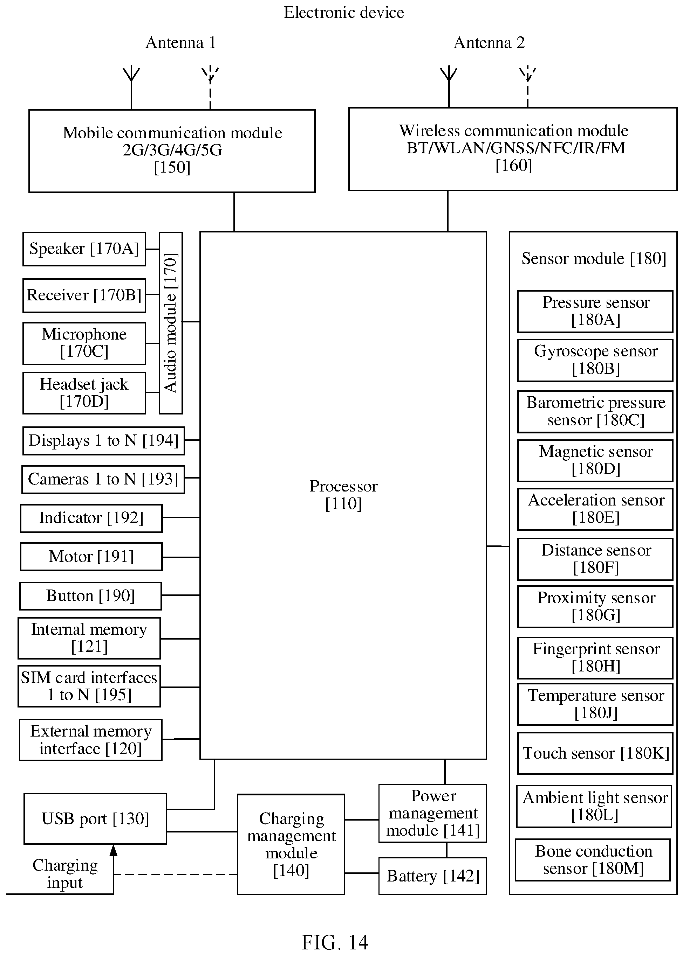

FIG. 14 is a schematic diagram of a structure of an electronic device according to an example not encompassed by the claims but useful for understanding this application.

The electronic device shown in FIG. 14 may be any electronic device in the distributed system 10 shown in FIG. 1, or may be the electronic device 100 or the electronic device 300 in the foregoing embodiments. This is not limited herein.

As shown in FIG. 14, the electronic device may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, a proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device. In some other embodiments of this application, the electronic device may include more or fewer components than those shown in the figure, combine some components, split some components, or have different component arrangements. The components shown in the figure may be implemented by hardware, software, or a combination of the software and the hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that the processor 110 has just used or cyclically uses. If the processor 110 needs to use the instructions or the data again, the processor 110 may directly call the instructions or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call through a Bluetooth headset.

The PCM interface may also be configured to perform audio communication, and sample, quantize, and encode an analog signal. In some embodiments, the audio module 170 may be coupled to the wireless communication module 160 through a PCM bus interface. In some embodiments, the audio module 170 may alternatively transfer an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through a Bluetooth headset.

The MIPI may be configured to connect the processor 110 to a peripheral component such as the display 194 or the camera 193. The MIPI includes a camera serial interface (camera serial interface, CSI), a display serial interface (display serial interface, DSI), and the like. In some embodiments, the processor 110 communicates with the camera 193 through the CSI, to implement a photographing function of the electronic device. The processor 110 communicates with the display 194 through the DSI, to implement a display function of the electronic device.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI, or the like.

The USB port 130 is a port that conforms to a USB standard specification, and may be specifically a mini USB port, a micro USB port, a USB type-C port, or the like. The USB port 130 may be configured to connect to the charger to charge the electronic device, may be configured to transmit data between the electronic device and a peripheral device, or may be configured to connect to a headset for playing audio through the headset. The interface may be further configured to connect to another electronic device such as an AR device.

It may be understood that, an interface connection relationship between the modules shown in this embodiment of this application is merely an example for description, and does not constitute a limitation on the structure of the electronic device. In some other embodiments of this application, the electronic device may alternatively use an interface connection manner different from that in the foregoing embodiment, or a combination of a plurality of interface connection manners.

The charging management module 140 is configured to receive charging input from the charger. The charger may be a wireless charger or a wired charger. In some embodiments of wired charging, the charging management module 140 may receive charging input of the wired charger through the USB port 130. In some embodiments of wireless charging, the charging management module 140 may receive wireless charging input through a wireless charging coil of the electronic device. The charging management module 140 may further supply power to the electronic device through the power management module 141 while charging the battery 142.

The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the electronic device and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution that is applied to the electronic device and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communications processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), the BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device implements a display function by using the GPU, the display 194, the application processor, and the like. The GPU is a microprocessor for image processing, and is connected to the display 194 and the application processor. The GPU is configured to: perform mathematical and geometric computation, and render graphics. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device may include one or N displays 194, where N is a positive integer greater than 1.

The electronic device may implement a photographing function by using the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into the electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transformation on frequency energy.

The video codec is configured to compress or decompress a digital video. The electronic device may support one or more types of video codecs. Therefore, the electronic device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. The NPU can implement application such as intelligent cognition of the electronic device, for example, image recognition, facial recognition, voice recognition, and text understanding.

The internal memory 121 may include one or more random access memories (random access memories, RAMs) and one or more non-volatile memories (non-volatile memories, NVMs).

The random access memory may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a DDR fifth-generation SDRAM, which is usually referred to as a DDR5 SDRAM), and the like. The non-volatile memory may include a magnetic disk storage device and a flash memory (flash memory).

Flash memories may be classified into a NOR flash, a NAND flash, a 3D NAND flash, and the like according to an operation principle, may be classified into a single-level cell (single-level cell, SLC), a multi-level cell (multi-level cell, MLC), a triple-level cell (triple-level cell, TLC), a quad-level cell (quad-level cell, QLC), and the like according to an electrical potential level of a cell, may be classified into a universal flash storage (English: universal flash storage, UFS), an embedded multimedia card (embedded multimedia Card, eMMC), and the like according to a storage specification.

The random access memory may be directly read and written by the processor 110, may be configured to store an executable program (for example, machine instructions) of an operating system or another program that is being run, and may be further configured to store data of a user and an application, and the like.

The non-volatile memory may also store the executable program, store the data of the user and the application, and the like, and may be loaded to the random access memory in advance, so that the processor 110 directly performs reading and writing.

The external memory interface 120 may be configured to connect to an external non-volatile memory, to extend a storage ability of the electronic device. The external non-volatile memory communicates with the processor 110 through the external memory interface 120, to implement a data storage function. For example, files such as music and a video are stored in the external non-volatile memory.

The electronic device may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device may be for listening to music or answering a hands-free call by using the speaker 170A.

The receiver 170B, also referred to as an "earpiece", is configured to convert an audio electrical signal into a sound signal. When a call is answered or voice information is received by using the electronic device, the receiver 170B may be put close to a human ear to receive a voice.

The microphone 170C, also referred to as a "mike" or a "mic", is configured to convert a sound signal into an electrical signal. When making a call or sending voice information, a user may make a sound near the microphone 170C through a human mouth, to input the sound signal to the microphone 170C. At least one microphone 170C may be disposed in the electronic device. In some other embodiments, two microphones 170C may be disposed in the electronic device, to implement a noise reduction function in addition to capturing a sound signal. In some other embodiments, three, four, or more microphones 170C may alternatively be disposed in the electronic device, to collect a sound signal, reduce noise, identify a sound source, implement a directional recording function, and the like.

The headset jack 170D is configured to connect to a wired headset. The headset jack 170D may be a USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device determines pressure intensity based on a capacitance change. When a touch operation is performed on the display 194, the electronic device detects intensity of the touch operation by using the pressure sensor 180A. The electronic device may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a short message service message application icon, an instruction for viewing a short message service message is executed. When a touch operation whose touch operation intensity is greater than or equal to the first pressure threshold is performed on the short message service message application icon, an instruction for creating a short message service message is executed.

The gyroscope sensor 180B may be configured to determine a motion posture of the electronic device. In some embodiments, an angular velocity of the electronic device around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects a jitter angle of the electronic device, calculates, based on the angle, a distance for which a lens module needs to compensate, and enables the lens to offset jitter of the electronic device through reverse motion, to implement image stabilization. The gyroscope sensor 180B may also be used in a navigation scenario and a somatic game scenario.

The barometric pressure sensor 180C is configured to measure barometric pressure. In some embodiments, the electronic device calculates an altitude based on a value of the barometric pressure measured by the barometric pressure sensor 180C, to assist in positioning and navigation.

The magnetic sensor 180D includes a Hall sensor. The electronic device may detect opening and closing of a flip cover by using the magnetic sensor 180D. In some embodiments, when the electronic device is a flip phone, the electronic device may detect opening and closing of the flip cover by using the magnetic sensor 180D. Further, a feature such as automatic unlocking of the flip cover is set based on a detected opening or closing state of the flip cover.

The acceleration sensor 180E may detect magnitude of acceleration in various directions (usually on three axes) of the electronic device. Magnitude and a direction of gravity may be detected when the electronic device is still. The acceleration sensor 180E may be further configured to identify a posture of the electronic device, and is used in an application such as switching between a landscape mode and a portrait mode or a pedometer.

The distance sensor 180F is configured to measure a distance. The electronic device may measure the distance through infrared or a laser. In some embodiments, in a photographing scenario, the electronic device may measure the distance by using the distance sensor 180F, to implement quick focusing.

The proximity sensor 180G may include, for example, a light emitting diode (LED) and an optical detector, for example, a photodiode. The light emitting diode may be an infrared light emitting diode. The electronic device emits infrared light by using the light emitting diode. The electronic device detects reflected infrared light from a nearby object by using the photodiode. When detecting sufficient reflected light, the electronic device may determine that there is an object near the electronic device. When detecting insufficient reflected light, the electronic device may determine that there is no object near the electronic device. The electronic device may detect, by using the proximity sensor 180G, that the user holds the electronic device close to an ear for a call, to automatically turn off a screen for power saving. The proximity sensor 180G may also be used in a smart cover mode or a pocket mode to automatically perform screen unlocking or locking.

The ambient light sensor 180L is configured to sense ambient light brightness. The electronic device may adaptively adjust brightness of the display 194 based on the sensed ambient light brightness. The ambient light sensor 180L may also be configured to automatically adjust white balance during photographing. The ambient light sensor 180L may further cooperate with the proximity sensor 180G to detect whether the electronic device is in a pocket, to avoid an unintentional touch.

The fingerprint sensor 180H is configured to collect a fingerprint. The electronic device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device executes a temperature processing policy by using the temperature detected by the temperature sensor 180J. For example, when the temperature reported by the temperature sensor 180J exceeds a threshold, the electronic device degrades performance of a processor near the temperature sensor 180J, to reduce power consumption and implement thermal protection. In some other embodiments, when the temperature is lower than another threshold, the electronic device heats the battery 142, to avoid an abnormal shutdown of the electronic device caused by a low temperature. In some other embodiments, when the temperature is lower than still another threshold, the electronic device boosts an output voltage of the battery 142, to avoid an abnormal shutdown caused by a low temperature.

The touch sensor 180K is also referred to as a "touch component". The touch sensor 180K may be disposed on the display 194, and a touchscreen includes the touch sensor 180K and the display 194. The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device, and is located at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device may receive button input, and generate button signal input related to user settings and function control of the electronic device.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device. The electronic device may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 simultaneously. The plurality of cards may be of a same type or different types. The SIM card interface 195 is also compatible with different types of SIM cards. The SIM card interface 195 is also compatible with an external storage card. The electronic device interacts with the network by using the SIM card, to implement functions such as calling and data communication. In some embodiments, the electronic device uses an eSIM, namely, an embedded SIM card. The eSIM card may be embedded into the electronic device, and cannot be separated from the electronic device.

The implementations of this application may be randomly combined, to achieve different technical effects.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to a computer or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the procedures of the methods in the foregoing embodiments may be implemented by a computer program instructing relevant hardware. The program may be stored in a computer-readable storage medium. When the program is executed, the procedures of the foregoing method embodiments may be performed. The foregoing storage medium includes any medium that can store program code, such as a ROM, a random access memory RAM, a magnetic disk, or an optical disc.

In summary, the foregoing descriptions are merely embodiments of the technical solutions of this application, but are not intended to limit the protection scope of this application.

## Claims

1. An access control method, wherein the method is applied to a communication system comprising a first device, a second device, and a third device, a first caller is installed in the first device, a second caller is installed in the second device, a callee is installed in the third device, the first caller, the second caller, and the callee are applications APPs or functional components, the APP is a program entity that implements a plurality of functions, and the functional component is a program entity that implements a single function;
the method comprises:
sending (S101), by the first device, a first access request to the third device, wherein the first access request is used by the first caller to call the callee to access a first resource in the third device;
sending, by the second device, a second access request to the third device, wherein the second access request is used by the second caller to call the callee to access a second resource in the third device;
in response to the first access request, creating (S103), by the third device, a first instance of the callee, and running (S104) the first instance to access the first resource; and
in response to the second access request, creating, by the third device, a second instance of the callee, and running the second instance to access the second resource, wherein the second instance is different from the first instance, the first instance and the second instance are processes or threads running in a random access memory RAM, and the first instance and the second instance are isolated from each other,
wherein the callee comprises a first part and a second part, the first part is deployed in the first device, the second part is deployed in the third device, and the first resource comprises resources in the first device and the third device;
before the sending, by the first device, a first access request to the third device, the method further comprises: creating (S301), by the first device, a third instance of the first caller, and running (S303) the third instance in a first permission range, wherein the first access request is generated in a process in which the first device runs the third instance; and
after the sending, by the first device, a first access request to the third device, the method further comprises: creating (S301), by the first device, a fourth instance of the first part, and running (S303) the fourth instance in a second permission range to access the first resource, wherein the third instance and the fourth instance have a same user identity UID, and the second permission range is different from the first permission range, wherein
the first instance is an instance of the second part.

2. The method according to claim 1, wherein
after the creating, by the third device, a first instance of the callee and the creating a second instance of the callee, the method further comprises: storing, by the third device, a calling relationship between the first caller in the first device and the first instance and a calling relationship between the second caller in the second device and the second instance;
after the sending, by the first device, a first access request to the third device, the method further comprises: storing, by the first device, a calling relationship between the first caller and the callee; and
after the sending, by the second device, a second access request to the third device, the method further comprises: storing, by the second device, a calling relationship between the second caller and the callee.

3. The method according to claim 1 or 2, wherein
the running, by the third device, the first instance specifically comprises: running, by the third device, the first instance in a first sandbox;
the running, by the third device, the second instance specifically comprises: running, by the third device, the second instance in a second sandbox; and
after the running, by the third device, the first instance and the running, by the third device, the second instance, the method further comprises:
generating, by the third device, first application data in a process of running the first instance, and storing the first application data in the first sandbox; and
generating, by the third device, second application data in a process of running the second instance, and storing the second application data in the second sandbox.

4. The method according to any one of claims 1 to 3, wherein after the sending, by the first device, a first access request to the third device, the method further comprises:
if the first caller in the first device changes from a first running status to a second running status,
sending, by the first device, the second running status of the first caller to the third device; and
changing, by the third device, a running status of the first instance to the second running status.

5. The method according to any one of claims 1 to 4, wherein after the sending, by the first device, a first access request to the third device, the method further comprises:
sending, by the first device, a third access request to a fourth device in the communication system if the third device fails to respond to the first access request, wherein the fourth device is the same as or different from the third device, and the callee is installed in the fourth device; and
in response to the third access request, creating, by the fourth device, a fifth instance of the callee, and running the fifth instance to access a third resource in the third device.

6. The method according to any one of claims 1 to 5, wherein before the sending, by the first device, a first access request to the third device, the method further comprises:
applying for and obtaining, by the first device, permission of the first caller to access the first resource, and sending, to the third device, information about the permission of the first caller to access the first resource.

7. The method according to any one of claims 1 to 5, wherein before the running, by the third device, the first instance to access the first resource, the method further comprises:
checking, by the third device, whether the first caller has permission to access the first resource;
if the first caller does not have the permission to access the first resource, applying, by the third device, to the first device for the permission of the first caller to access the first resource; and
applying for and obtaining, by the first device, the permission of the first caller to access the first resource, and sending, to the third device, information about the permission of the first caller to access the first resource.

8. The method according to claim 7, wherein
the permission that is of the first caller to access the first resource and that is applied for and obtained by the first device is valid in a first time period; or
after the sending, by the first device to the third device, information about the permission of the first caller to access the first resource, the method further comprises: sending, by the first device to the third device, a message for revoking the permission of the first caller to access the first resource.

9. The method according to any one of claims 6 to 8, wherein the first caller is a third-party application, and after the sending, by the first device to the third device, information about the permission of the first caller to access the first resource, the method further comprises:
recording, by the first device, first information, wherein the first information indicates that the third device has obtained the permission information of the first caller; and
after the permission of the first caller in the first device changes,
sending, by the first device, changed permission information of the first caller to the third device based on the first information.

10. The method according to any one of claims 1 to 9, wherein the first caller is a system application, and before the sending, by the first device, a first access request to the third device, the method further comprises:
sending, by the first device, permission information of each installed system application to the third device after a connection is established between the first device and the third device.

11. The method according to any one of claims 1 to 10, wherein before the in response to the second access request, creating, by the third device, a second instance of the callee, and running the second instance to access the second resource, the method further comprises:
when the third device does not meet an authorization condition, a distance between the third device and a user exceeds a first value, or the third device is not suitable for authorization currently, notifying, by the third device, a fifth device in the communication system to apply for first permission, wherein the first permission comprises permission to call the callee in the third device to access the first resource in the third device; and
applying for and obtaining, by the fifth device, the first permission, and sending an authorization result to the third device, wherein the authorization result indicates that the user has granted the first permission.

12. The method according to any one of claims 1 to 11, wherein before the running, by the third device, the first instance to access the first resource, the method further comprises:
sending, by the first device, identity information of the first caller to the third device, wherein the identity information of the first caller comprises one or more of the following: a PID and a UID of the first caller, an account ID for logging in to the first device, a system ID of the first device in the communication system, and a device ID of the first device, and different identity information corresponds to different access permission; and
determining, by the third device, access permission corresponding to the identity information of the first caller, wherein the access permission comprises permission of the first caller to access the callee.

## Patentansprüche

1. Zugriffssteuerungsverfahren, wobei das Verfahren auf ein Kommunikationssystem, das eine erste Vorrichtung, eine zweite Vorrichtung und eine dritte Vorrichtung umfasst, angewendet wird, ein erster Anrufer in der ersten Vorrichtung installiert ist, ein zweiter Anrufer in der zweiten Vorrichtung installiert ist, ein Angerufener in der dritten Vorrichtung installiert ist, der erste Anrufer, der zweite Anrufer und der Angerufene Anwendungen APPs oder funktionale Komponenten sind, die APP eine Programmeinheit, die eine Vielzahl von Funktionen implementiert, ist und die funktionale Komponente eine Programmeinheit, die eine einzelne Funktion implementiert, ist;
das Verfahren umfasst:
Senden (S101), durch die erste Vorrichtung, einer ersten Zugriffsanfrage an die dritte Vorrichtung, wobei die erste Zugriffsanfrage durch den ersten Anrufer verwendet wird, um den Angerufenen anzurufen, um auf eine erste Ressource in der dritten Vorrichtung zuzugreifen;
Senden, durch die zweite Vorrichtung, einer zweiten Zugriffsanfrage an die dritte Vorrichtung, wobei die zweite Zugriffsanfrage durch den zweiten Anrufer verwendet wird, um den Angerufenen anzurufen, um auf eine zweite Ressource in der dritten Vorrichtung zuzugreifen;
als Reaktion auf die erste Zugriffsanfrage, Erstellen (S103), durch die dritte Vorrichtung, einer ersten Instanz des Angerufenen, und Ausführen (S104) der ersten Instanz, um auf die erste Ressource zuzugreifen; und
als Reaktion auf die zweite Zugriffsanfrage, Erstellen, durch die dritte Vorrichtung, einer zweiten Instanz des Angerufenen und Ausführen der zweiten Instanz, um auf die zweite Ressource zuzugreifen, wobei sich die zweite Instanz von der ersten Instanz unterscheidet, die erste Instanz und die zweite Instanz Prozesse oder Threads, die in einem Direktzugriffsspeicher RAM ausgeführt werden, sind und die erste Instanz und die zweite Instanz voneinander isoliert sind,
wobei der Angerufene einen ersten Teil und einen zweiten Teil umfasst, der erste Teil in der ersten Vorrichtung eingesetzt ist, der zweite Teil in der dritten Vorrichtung eingesetzt ist, und die erste Ressource Ressourcen in der ersten Vorrichtung und der dritten Vorrichtung umfasst;
wobei vor dem Senden, durch die erste Vorrichtung, einer ersten Zugriffsanfrage an die dritte Vorrichtung, das Verfahren ferner umfasst: Erstellen (S301), durch die erste Vorrichtung, einer dritten Instanz des ersten Anrufers und Ausführen (S303) der dritten Instanz in einem ersten Berechtigungsbereich, wobei die erste Zugriffsanfrage in einem Prozess, in dem die erste Vorrichtung die dritte Instanz ausführt, erzeugt wird; und wobei nach dem Senden, durch die erste Vorrichtung, einer ersten Zugriffsanfrage an die dritte Vorrichtung das Verfahren ferner umfasst: Erstellen (S301), durch die erste Vorrichtung, einer vierten Instanz des ersten Teils und Ausführen (S303) der vierten Instanz in einem zweiten Berechtigungsbereich, um auf die erste Ressource zuzugreifen, wobei die dritte Instanz und die vierte Instanz eine gleiche Benutzeridentität UID aufweisen und sich der zweite Berechtigungsbereich von dem ersten Berechtigungsbereich unterscheidet, wobei
die erste Instanz eine Instanz des zweiten Teils ist.

2. Verfahren nach Anspruch 1, wobei
nach dem Erstellen, durch die dritte Vorrichtung, einer ersten Instanz des Angerufenen und dem Erstellen einer zweiten Instanz des Angerufenen das Verfahren ferner umfasst: Speichern, durch die dritte Vorrichtung, einer Anrufbeziehung zwischen dem ersten Anrufer in der ersten Vorrichtung und der ersten Instanz und einer Anrufbeziehung zwischen dem zweiten Anrufer in der zweiten Vorrichtung und der zweiten Instanz;
nach dem Senden, durch die erste Vorrichtung, einer ersten Zugriffsanfrage an die dritte Vorrichtung das Verfahren ferner umfasst: Speichern, durch die erste Vorrichtung, einer Anrufbeziehung zwischen dem ersten Anrufer und dem Angerufenen; und
nach dem Senden, durch die zweite Vorrichtung, einer zweiten Zugriffsanfrage an die dritte Vorrichtung das Verfahren ferner umfasst: Speichern, durch die zweite Vorrichtung, einer Anrufbeziehung zwischen dem zweiten Anrufer und dem Angerufenen.

3. Verfahren nach Anspruch 1 oder 2, wobei
das Ausführen, durch die dritte Vorrichtung, der ersten Instanz spezifisch umfasst: Ausführen, durch die dritte Vorrichtung, der ersten Instanz in einer ersten Sandbox; das Ausführen, durch die dritte Vorrichtung, der zweiten Instanz spezifisch umfasst: Ausführen, durch die dritte Vorrichtung, der zweiten Instanz in einer zweiten Sandbox; und nach dem Ausführen, durch die dritte Vorrichtung, der ersten Instanz und dem Ausführen, durch die dritte Vorrichtung, der zweiten Instanz, das Verfahren ferner umfasst:
Erzeugen, durch die dritte Vorrichtung, von ersten Anwendungsdaten in einem Prozess des Ausführens der ersten Instanz und Speichern der ersten Anwendungsdaten in der ersten Sandbox; und
Erzeugen, durch die dritte Vorrichtung, von zweiten Anwendungsdaten in einem Prozess des Ausführens der zweiten Instanz und Speichern der zweiten Anwendungsdaten in der zweiten Sandbox.

4. Verfahren nach einem der Ansprüche 1 bis 3, wobei nach dem Senden, durch die erste Vorrichtung, einer ersten Zugriffsanfrage an die dritte Vorrichtung, das Verfahren ferner umfasst:
falls sich der erste Anrufer in der ersten Vorrichtung von einem ersten Ausführungsstatus zu einem zweiten Ausführungsstatus ändert, Senden, durch die erste Vorrichtung, des zweiten Ausführungsstatus des ersten Anrufers an die dritte Vorrichtung; und
Ändern, durch die dritte Vorrichtung, eines Ausführungsstatus der ersten Instanz zu dem zweiten Ausführungsstatus.

5. Verfahren nach einem der Ansprüche 1 bis 4, wobei nach dem Senden, durch die erste Vorrichtung, einer ersten Zugriffsanfrage an die dritte Vorrichtung, das Verfahren ferner umfasst:
Senden, durch die erste Vorrichtung, einer dritten Zugriffsanfrage an eine vierte Vorrichtung in dem Kommunikationssystem, falls die dritte Vorrichtung daran scheitert, auf die erste Zugriffsanfrage zu reagieren, wobei die vierte Vorrichtung dieselbe wie die dritte Vorrichtung ist oder sich davon unterscheidet, und der Angerufene in der vierten Vorrichtung installiert ist; und
als Reaktion auf die dritte Zugriffsanfrage, Erstellen, durch die vierte Vorrichtung, einer fünften Instanz des Angerufenen und Ausführen der fünften Instanz, um auf eine dritte Ressource in der dritten Vorrichtung zuzugreifen.

6. Verfahren nach einem der Ansprüche 1 bis 5, wobei vor dem Senden, durch die erste Vorrichtung, einer ersten Zugriffsanfrage an die dritte Vorrichtung, das Verfahren ferner umfasst:
Beantragen und Erhalten, durch die erste Vorrichtung, einer Berechtigung des ersten Anrufers, um auf die erste Ressource zuzugreifen, und Senden, an die dritte Vorrichtung, von Informationen über die Berechtigung des ersten Anrufers, um auf die erste Ressource zuzugreifen.

7. Verfahren nach einem der Ansprüche 1 bis 5, wobei, vor dem Ausführen, durch die dritte Vorrichtung, der ersten Instanz, um auf die erste Ressource zuzugreifen, das Verfahren ferner umfasst:
Prüfen, durch die dritte Vorrichtung, ob der erste Anrufer die Berechtigung aufweist, um auf die erste Ressource zuzugreifen;
falls der erste Anrufer nicht die Berechtigung aufweist, um auf die erste Ressource zuzugreifen, Beantragen, durch die dritte Vorrichtung, bei der ersten Vorrichtung der Berechtigung des ersten Anrufers, um auf die erste Ressource zuzugreifen; und Beantragen und Erhalten, durch die erste Vorrichtung, der Berechtigung des ersten Anrufers, um auf die erste Ressource zuzugreifen, und Senden, an die dritte Vorrichtung, von Informationen über die Berechtigung des ersten Anrufers, um auf die erste Ressource zuzugreifen.

8. Verfahren nach Anspruch 7, wobei
die Berechtigung, die von dem ersten Anrufer ist, um auf die erste Ressource zuzugreifen, und die durch die erste Vorrichtung beantragt und erhalten wird, in einer ersten Zeitspanne gültig ist; oder
nach dem Senden, durch die erste Vorrichtung an die dritte Vorrichtung, von Informationen über die Berechtigung des ersten Anrufers, um auf die erste Ressource zuzugreifen, das Verfahren ferner umfasst: Senden, durch die erste Vorrichtung an die dritte Vorrichtung, einer Nachricht zum Widerrufen der Berechtigung des ersten Anrufers, um auf die erste Ressource zuzugreifen.

9. Verfahren nach einem der Ansprüche 6 bis 8, wobei der erste Anrufer eine Drittanbieteranwendung ist und nach dem Senden, durch die erste Vorrichtung an die dritte Vorrichtung, von Informationen über die Berechtigung des ersten Anrufers, um auf die erste Ressource zuzugreifen, das Verfahren ferner umfasst:
Aufzeichnen, durch die erste Vorrichtung, von ersten Informationen, wobei die ersten Informationen anzeigen, dass die dritte Vorrichtung die Berechtigungsinformationen des ersten Anrufers erhalten hat; und
nachdem sich die Berechtigung des ersten Anrufers in der ersten Vorrichtung geändert hat,
Senden, durch die erste Vorrichtung, von geänderten Berechtigungsinformationen des ersten Anrufers an die dritte Vorrichtung basierend auf den ersten Informationen.

10. Verfahren nach einem der Ansprüche 1 bis 9, wobei der erste Anrufer eine Systemanwendung ist und vor dem Senden, durch die erste Vorrichtung, einer ersten Zugriffsanfrage an die dritte Vorrichtung, das Verfahren ferner umfasst:
Senden, durch die erste Vorrichtung, von Berechtigungsinformationen über jede installierte Systemanwendung an die dritte Vorrichtung, nachdem eine Verbindung zwischen der ersten Vorrichtung und der dritten Vorrichtung hergestellt wurde.

11. Verfahren nach einem der Ansprüche 1 bis 10, wobei vor dem Erstellen, als Reaktion auf die zweite Zugriffsanfrage, durch die dritte Vorrichtung, einer zweiten Instanz des Angerufenen und dem Ausführen der zweiten Instanz, um auf die zweite Ressource zuzugreifen, das Verfahren ferner umfasst:
wenn die dritte Vorrichtung eine Autorisierungsbedingung nicht erfüllt, ein Abstand zwischen der dritten Vorrichtung und einem Benutzer einen ersten Wert überschreitet, oder die dritte Vorrichtung derzeit nicht für eine Autorisierung geeignet ist, Benachrichtigen, durch die dritte Vorrichtung, einer fünften Vorrichtung in dem Kommunikationssystem, um die erste Berechtigung zu beantragen, wobei die erste Berechtigung die Berechtigung umfasst, um den Angerufenen in der dritten Vorrichtung anzurufen, um auf die erste Ressource in der dritten Vorrichtung zuzugreifen; und
Beantragen und Erhalten, durch die fünfte Vorrichtung, der ersten Berechtigung, und Senden eines Autorisierungsergebnisses an die dritte Vorrichtung, wobei das Autorisierungsergebnis anzeigt, dass der Benutzer die erste Berechtigung gewährt hat.

12. Verfahren nach einem der Ansprüche 1 bis 11, wobei, vor dem Ausführen, durch die dritte Vorrichtung, der ersten Instanz, um auf die erste Ressource zuzugreifen, das Verfahren ferner umfasst:
Senden, durch die erste Vorrichtung, von Identitätsinformationen des ersten Anrufers an die dritte Vorrichtung, wobei die Identitätsinformationen des ersten Anrufers eines oder mehrere der Folgenden umfassen: eine PID und eine UID des ersten Anrufers, eine Konto-ID zum Anmelden an der ersten Vorrichtung, eine System-ID der ersten Vorrichtung in dem Kommunikationssystem und eine Vorrichtungs-ID der ersten Vorrichtung, und unterschiedliche Identitätsinformationen entsprechen einer unterschiedlichen Zugriffsberechtigung; und
Bestimmen, durch die dritte Vorrichtung, der Zugriffsberechtigung entsprechend den Identitätsinformationen des ersten Anrufers, wobei die Zugriffsberechtigung die Berechtigung des ersten Anrufers umfasst, um auf den Angerufenen zuzugreifen.

## Revendications

1. Procédé de commande d'accès, dans lequel le procédé est appliqué à un système de communication comprenant un premier dispositif, un deuxième dispositif et un troisième dispositif, un premier appelant est installé dans le premier dispositif, un second appelant est installé dans le deuxième dispositif, un appelé est installé dans le troisième dispositif, le premier appelant, le second appelant, et l'appelé sont des applications APP ou des composants fonctionnels, l'APP est une entité de programme qui met en œuvre une pluralité de fonctions, et le composant fonctionnel est une entité de programme qui met en œuvre une fonction unique ;
le procédé comprend :
l'envoi (S101), par le premier dispositif, d'une première demande d'accès au troisième dispositif, dans lequel la première demande d'accès est utilisée par le premier appelant pour appeler l'appelé à accéder à une première ressource dans le troisième dispositif ; l'envoi, par le deuxième dispositif, d'une deuxième demande d'accès au troisième dispositif, dans lequel la seconde demande d'accès est utilisée par le second appelant pour appeler l'appelé à accéder à une seconde ressource dans le troisième dispositif ; en réponse à la première demande d'accès, la création (S103), par le troisième dispositif, d'une première instance de l'appelé, et l'exécution (S104) de la première instance pour accéder à la première ressource ; et
en réponse à la deuxième demande d'accès, la création, par le troisième dispositif, d'une deuxième instance de l'appelé, et l'exécution de la deuxième instance pour accéder à la seconde ressource, dans lequel la deuxième instance est différente de la première instance, la première instance et la deuxième instance sont des processus ou des fils s'exécutant dans une mémoire vive RAM, et la première instance et la deuxième instance sont isolées l'une de l'autre,
dans lequel l'appelé comprend une première partie et une seconde partie, la première partie est déployée dans le premier dispositif, la deuxième partie est déployée dans le troisième dispositif, et la première ressource comprend des ressources dans le premier dispositif et le troisième dispositif ;
avant l'envoi, par le premier dispositif, d'une première demande d'accès au troisième dispositif, le procédé comprend en outre : la création (S301), par le premier dispositif, d'une troisième instance du premier appelant, et l'exécution (S303) de la troisième instance dans une première plage de permissions, dans lequel la première demande d'accès est générée dans un processus dans lequel le premier dispositif exécute la troisième instance ; et
après l'envoi, par le premier dispositif, d'une première demande d'accès au troisième dispositif, le procédé comprend en outre : la création (S301), par le premier dispositif, d'une quatrième instance de la première partie, et l'exécution (S303) de la quatrième instance dans une seconde plage de permissions pour accéder à la première ressource, dans lequel la troisième instance et la quatrième instance ont une même identité d'utilisateur, UID, et la seconde plage de permissions est différente de la première plage de permissions, dans lequel la première instance est une instance de la seconde partie.

2. Procédé selon la revendication 1, dans lequel
après la création, par le troisième dispositif, d'une première instance de l'appelé et la création d'une deuxième instance de l'appelé, le procédé comprend en outre : le stockage, par le troisième dispositif, d'une relation d'appel entre le premier appelant dans le premier dispositif et la première instance et d'une relation d'appel entre le second appelant dans le deuxième dispositif et la deuxième instance ;
après l'envoi, par le premier dispositif, d'une première demande d'accès au troisième dispositif, le procédé comprend en outre : le stockage, par le premier dispositif, d'une relation d'appel entre le premier appelant et l'appelé ; et
après l'envoi, par le deuxième dispositif, d'une deuxième demande d'accès au troisième dispositif, le procédé comprend en outre : le stockage, par le deuxième dispositif, d'une relation d'appel entre le second appelant et l'appelé.

3. Procédé selon la revendication 1 ou 2, dans lequel
l'exécution, par le troisième dispositif, de la première instance comprend spécifiquement : l'exécution, par le troisième dispositif, de la première instance dans un premier bac à sable ;
l'exécution, par le troisième dispositif, de la deuxième instance comprend spécifiquement : l'exécution, par le troisième dispositif, de la deuxième instance dans un second bac à sable ; et
après l'exécution, par le troisième dispositif, de la première instance et l'exécution, par le troisième dispositif, de la deuxième instance, le procédé comprend en outre :
la génération, par le troisième dispositif, de premières données d'application dans un processus d'exécution de la première instance, et le stockage des premières données d'application dans le premier bac à sable ; et
la génération, par le troisième dispositif, de secondes données d'application dans un processus d'exécution de la deuxième instance, et le stockage des secondes données d'application dans le second bac à sable.

4. Procédé selon l'une quelconque des revendications 1 à 3, dans lequel, après l'envoi, par le premier dispositif, d'une première demande d'accès au troisième dispositif, le procédé comprend en outre :
si le premier appelant dans le premier dispositif passe d'un premier état d'exécution à un second état d'exécution,
l'envoi, par le premier dispositif, du second état d'exécution du premier appelant au troisième dispositif ; et
le changement, par le troisième dispositif, d'un état d'exécution de la première instance au second état d'exécution.

5. Procédé selon l'une quelconque des revendications 1 à 4, dans lequel, après l'envoi, par le premier dispositif, d'une première demande d'accès au troisième dispositif, le procédé comprend en outre :
l'envoi, par le premier dispositif, d'une troisième demande d'accès à un quatrième dispositif dans le système de communication si le troisième dispositif ne répond pas à la première demande d'accès, dans lequel le quatrième dispositif est identique ou différent du troisième dispositif, et l'appelé est installé dans le quatrième dispositif ; et en réponse à la troisième demande d'accès, la création, par le quatrième dispositif, d'une cinquième instance de l'appelé, et l'exécution de la cinquième instance pour accéder à une troisième ressource dans le troisième dispositif.

6. Procédé selon l'une quelconque des revendications 1 à 5, dans lequel, avant l'envoi, par le premier dispositif, d'une première demande d'accès au troisième dispositif, le procédé comprend en outre :
l'application et l'obtention, par le premier dispositif, de la permission du premier appelant d'accéder à la première ressource, et l'envoi, au troisième dispositif, d'informations concernant la permission du premier appelant d'accéder à la première ressource.

7. Procédé selon l'une quelconque des revendications 1 à 5, dans lequel, avant l'exécution, par le troisième dispositif, de la première instance pour accéder à la première ressource, le procédé comprend en outre :
la vérification, par le troisième dispositif, du fait de savoir si le premier appelant a la permission d'accéder à la première ressource ;
si le premier appelant n'a pas la permission d'accéder à la première ressource, l'application, par le troisième dispositif, au premier dispositif de la permission du premier appelant d'accéder à la première ressource ; et
l'application et l'obtention, par le premier dispositif, de la permission du premier appelant pour accéder à la première ressource, et l'envoi, au troisième dispositif, d'informations concernant la permission du premier appelant d'accéder à la première ressource.

8. Procédé selon la revendication 7, dans lequel
la permission qui est celle du premier appelant d'accéder à la première ressource et qui est appliquée et obtenue par le premier dispositif est valide dans une première période de temps ; ou
après l'envoi, par le premier dispositif au troisième dispositif, d'informations concernant la permission du premier appelant d'accéder à la première ressource, le procédé comprend en outre : l'envoi, par le premier dispositif au troisième dispositif, d'un message pour révoquer la permission du premier appelant d'accéder à la première ressource.

9. Procédé selon l'une quelconque des revendications 6 à 8, dans lequel le premier appelant est une application tierce, et après l'envoi, par le premier dispositif au troisième dispositif, d'informations concernant la permission du premier appelant d'accéder à la première ressource, le procédé comprend en outre :
l'enregistrement, par le premier dispositif, de premières informations, dans lequel les premières informations indiquent que le troisième dispositif a obtenu les informations de permission du premier appelant ; et
après que la permission du premier appelant dans le premier dispositif change, l'envoi, par le premier dispositif, d'informations de permission modifiées du premier appelant au troisième dispositif sur la base des premières informations.

10. Procédé selon l'une quelconque des revendications 1 à 9, dans lequel le premier appelant est une application système, et avant l'envoi par le premier dispositif, d'une première demande d'accès au troisième dispositif, le procédé comprend en outre : l'envoi, par le premier dispositif, d'informations de permission de chaque application système installée au troisième dispositif après l'établissement d'une connexion entre le premier dispositif et le troisième dispositif.

11. Procédé selon l'une quelconque des revendications 1 à 10, dans lequel avant la réponse à la deuxième demande d'accès, la création, par le troisième dispositif, d'une deuxième instance de l'appelé, et l'exécution de la deuxième instance pour accéder à la seconde ressource, le procédé comprend en outre :
lorsque le troisième dispositif ne remplit pas une condition d'autorisation, qu'une distance entre le troisième dispositif et un utilisateur dépasse une première valeur, ou que le troisième dispositif n'est pas adapté à l'autorisation actuellement, la notification, par le troisième dispositif, à un cinquième dispositif dans le système de communication d'appliquer une première permission, dans lequel la première permission comprend la permission d'appeler l'appelé dans le troisième dispositif pour accéder à la première ressource dans le troisième dispositif ; et
l'application et l'obtention, par le cinquième dispositif, de la première permission, et l'envoi d'un résultat d'autorisation au troisième dispositif, dans lequel le résultat d'autorisation indique que l'utilisateur a accordé la première permission.

12. Procédé selon l'une quelconque des revendications 1 à 11, dans lequel, avant l'exécution, par le troisième dispositif, de la première instance pour accéder à la première ressource, le procédé comprend en outre :
l'envoi, par le premier dispositif, d'informations d'identité du premier appelant au troisième dispositif, dans lequel les informations d'identité du premier appelant comprennent un ou plusieurs des éléments suivants : un PID et un UID du premier appelant, un ID de compte pour la connexion au premier dispositif, un ID de système du premier dispositif dans le système de communication, et un ID de dispositif du premier dispositif, et différentes informations d'identité correspondent à une permission d'accès différente ; et
la détermination, par le troisième dispositif, d'une permission d'accès correspondant aux informations d'identité du premier appelant, dans lequel la permission d'accès comprend la permission du premier appelant d'accéder à l'appelé.
